# EUROPEAN PATENT APPLICATION

(11) **EP 4 280 719 A1**
(43) Date of publication of application: **22.11.2023**
(21) Application number: 22739140.6
(22) Date of filing: 14.01.2022
(51) Int. Cl.: H04W 64/00

(54) **POSITIONING METHOD AND APPARATUS, DEVICE, AND STORAGE MEDIUM**

(30) Priority: 15.01.2021 CN 202110057865
(71) Applicant: Vivo Mobile Communication Co., Ltd., Dongguan, Guangdong 523863 (CN)
(72) Inventor: ZHUANG, Zixun, Dongguan, Guangdong 523863 (CN); WANG, Yuanyuan, Dongguan, Guangdong 523863 (CN); SI, Ye, Dongguan, Guangdong 523863 (CN); WU, Huaming, Dongguan, Guangdong 523863 (CN)
(74) Representative: Winter, Brandl - Partnerschaft mbB
(86) International application number: PCT/CN2022/072125
(87) International publication number: WO 2022/152265

(57) **Abstract**

This application discloses a positioning method and apparatus, a device, and a storage medium, and pertains to the field of communication technologies. The positioning method includes: receiving, by a first communication device, a first positioning reference signal and determining first target beam information; and/or, determining, by the first communication device, location information based on the first positioning reference signal and sending the location information and first beam information.

## Description

### CROSS-REFERENCE TO RELATED APPLICATIONS

This application claims priority to Chinese Patent Application No. 202110057865.1, filed in China on January 15, 2021, which is incorporated herein by reference in its entirety.

### TECHNICAL FIELD

This application pertains to the field of communications technologies, and specifically relates to a positioning method and apparatus, a device, and a storage medium.

### BACKGROUND

In the positioning process of terminals, signals are received and measured to obtain time of arrival or angle of arrival. For whether a direct path directly affects positioning accuracy, there is still no reasonable solution in the related art to reduce or remove such impact, resulting in low positioning accuracy for terminals.

### SUMMARY

Embodiments of this application provide a positioning method and apparatus, a device, and a storage medium, so as to improve positioning accuracy based on receive beam related information of a first communication device and transmit beam related information of a second communication device.

According to a first aspect, a positioning method is provided, and the method includes: receiving, by a first communication device, a first positioning reference signal and determining first target beam information; and/or, determining, by the first communication device, location information based on the first positioning reference signal and sending the location information and first beam information; where the first target beam information is information about a beam receiving the first positioning reference signal, and the first target beam information includes at least one of the following:
receive beam identification information corresponding to a beam for receiving the first positioning reference signal;
receive beam pattern information or response information corresponding to the beam for receiving the first positioning reference signal;
receive beam direction information corresponding to the beam for receiving the first positioning reference signal;
receive beam width information corresponding to the beam for receiving the first positioning reference signal; and
receive antenna information of the first communication device; where the first beam information includes at least one of the following:
   receive beam identification information;
   receive beam pattern information or response information;
   receive beam direction information;
   receive beam width information; and
   receive antenna information of the first communication device.

According to a second aspect, a positioning method is provided, where the method includes:
sending, by a second communication device, a first positioning reference signal and/or second target beam information; where
the first positioning reference signal is used for determining location information and/or first target beam information by a first communication device; and
the second target beam information is information about a beam sending the first positioning reference signal, and the second target beam information includes at least one of the following:
   transmit beam identification information corresponding to the beam for sending the first positioning reference signal;
   transmit beam pattern information or response information corresponding to the beam for sending the first positioning reference signal;
   transmit beam direction information corresponding to the beam for sending the first positioning reference signal;
   transmit beam width information corresponding to the beam for sending the first positioning reference signal; and
   transmit antenna information of the second communication device.

According to a third aspect, a positioning method is provided, where the method includes:
receiving, by a third communication device, at least one of the following:
first target beam information of a first communication device;
second target beam information of a second communication device; and
location information and first beam information of the first communication device; where
the first target beam information includes at least one of the following:
   receive beam identification information corresponding to a beam for receiving the first positioning reference signal;
   receive beam pattern information or response information corresponding to the beam for receiving the first positioning reference signal;
   receive beam direction information corresponding to the beam for receiving the first positioning reference signal;
   receive beam width information corresponding to the beam for receiving the first positioning reference signal; and
   receive antenna information of the first communication device; where
   the first beam information includes at least one of the following:
      receive beam identification information;
      receive beam pattern information or response information;
      receive beam direction information;
      receive beam width information; and
      receive antenna information of the first communication device; where the second target beam information includes at least one of the following:
         transmit beam identification information corresponding to a beam for sending the first positioning reference signal;
         transmit beam pattern information or response information corresponding to the beam for sending the first positioning reference signal;
         transmit beam direction information corresponding to the beam for sending the first positioning reference signal;
         transmit beam width information corresponding to the beam for sending the first positioning reference signal; and
         transmit antenna information of the second communication device.

According to a fourth aspect, a positioning apparatus is provided, where the apparatus includes:
a first processing unit, configured to receive a first positioning reference signal and determine first target beam information;
   and/or,
determine location information based on the first positioning reference signal and send the location information and first beam information; where
the first target beam information is information about a beam receiving the first positioning reference signal, and the first target beam information includes at least one of the following:
   receive beam identification information corresponding to a beam for receiving the first positioning reference signal;
   receive beam pattern information or response information corresponding to the beam for receiving the first positioning reference signal;
   receive beam direction information corresponding to the beam for receiving the first positioning reference signal;
   receive beam width information corresponding to the beam for receiving the first positioning reference signal; and
   receive antenna information of the first communication device; where
   the first beam information includes at least one of the following:
      receive beam identification information;
      receive beam pattern information or response information;
      receive beam direction information;
      receive beam width information; and
      receive antenna information of the first communication device.

According to a fifth aspect, a positioning apparatus is provided, where the apparatus includes:
a third sending unit, configured to send a first positioning reference signal and/or second target beam information; where
the first positioning reference signal is used for determining location information and/or first target beam information by a first communication device; and
the second target beam information is information about a beam for sending the first positioning reference signal, and the second target beam information includes at least one of the following:
   transmit beam identification information corresponding to the beam for sending the first positioning reference signal;
   transmit beam pattern information or response information corresponding to the beam for sending the first positioning reference signal;
   transmit beam direction information corresponding to the beam for sending the first positioning reference signal;
   transmit beam width information corresponding to the beam for sending the first positioning reference signal; and
   transmit antenna information of the second communication device.

According to a sixth aspect, a positioning apparatus is provided, where the apparatus includes:
a sixth receiving unit, configured to receive at least one of the following:
first target beam information of a first communication device;
second target beam information of a second communication device; and
location information and first beam information of the first communication device; where
the first target beam information includes at least one of the following:
   receive beam identification information corresponding to a beam for receiving the first positioning reference signal;
   receive beam pattern information or response information corresponding to the beam for receiving the first positioning reference signal;
   receive beam direction information corresponding to the beam for receiving the first positioning reference signal;
   receive beam width information corresponding to the beam for receiving the first positioning reference signal; and
   receive antenna information of the first communication device; where the first beam information includes at least one of the following:
      receive beam identification information;
      receive beam pattern information or response information;
      receive beam direction information;
      receive beam width information; and
      receive antenna information of the first communication device; where the second target beam information includes at least one of the following:
         transmit beam identification information corresponding to a beam for sending the first positioning reference signal;
         transmit beam pattern information or response information corresponding to the beam for sending the first positioning reference signal;
         transmit beam direction information corresponding to the beam for sending the first positioning reference signal;
         transmit beam width information corresponding to the beam for sending the first positioning reference signal; and
         transmit antenna information of the second communication device.

According to a seventh aspect, a terminal is provided, where the terminal includes a processor, a memory, and a program or instructions stored in the memory and capable of running on the processor, and when the program or the instructions are executed by the processor, the steps of the method according to the first aspect are implemented, or the steps of the method according to the second aspect are implemented.

According to an eighth aspect, a network-side device is provided, where the network-side device includes a processor, a memory, and a program or instructions stored in the memory and capable of running on the processor, and when the program or the instructions are executed by the processor, the steps of the method according to the first aspect are implemented, or the steps of the method according to the second aspect are implemented, or the steps of the method according to the third aspect are implemented.

According to a ninth aspect, a readable storage medium is provided, where a program or instructions are stored in the readable storage medium, and when the program or the instructions are executed by a processor, the steps of the method according to the first aspect are implemented, or the steps of the method according to the second aspect are implemented, or the steps of the method according to the third aspect are implemented.

According to a tenth aspect, a chip is provided, where the chip includes a processor and a communication interface, the communication interface is coupled to the processor, and the processor is configured to run a program or instructions to implement the method according to the first aspect, or implement the method according to the second aspect, or implement the steps of the method according to the third aspect.

In the embodiments of this application, the first communication device receives the first positioning reference signal and determines the first target beam information; and/or, determines location information and send the location information and first beam information. The first target beam information is information related to a beam receiving the positioning reference signal. The first beam information includes at least one of receive beam identification information, receive beam pattern information or response information, receive beam direction information, receive beam width information, and receive antenna information of the first communication device. Using such information helps more accurately obtain angle of arrival information to improve positioning accuracy.

### BRIEF DESCRIPTION OF DRAWINGS

FIG 1 is a block diagram of a wireless communication system to which the embodiments of this application are applicable;
FIG. 2 is a schematic flowchart of a positioning method according to an embodiment of this application;
FIG. 3 is a schematic diagram of a beam pattern according to an embodiment of this application;
FIG. 4 is a schematic diagram of angle width information according to an embodiment of this application;
FIG. 5 is a second schematic flowchart of a positioning method according to an embodiment of this application;
FIG. 6 is a third schematic flowchart of a positioning method according to an embodiment of this application;
FIG. 7 is a first schematic structural diagram of a positioning apparatus according to an embodiment of this application;
FIG. 8 is a second schematic structural diagram of a positioning apparatus according to an embodiment of this application;
FIG. 9 is a third schematic structural diagram of a positioning apparatus according to an embodiment of this application;
FIG. 10 is a schematic structural diagram of a communication device for implementing the embodiments of this application;
FIG. 11 is a schematic diagram of a hardware structure of a terminal for implementing the embodiments of this application; and
FIG. 12 is a schematic diagram of a hardware structure of a network-side device for implementing the embodiments of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, in the specification and claims, "and/or" represents presence of at least one of connected objects, and the symbol "/" in this specification usually indicates an "or" relationship between associated objects.

It should be noted that techniques described in the embodiments of this application are not limited to a long term evolution (Long Term Evolution, LTE) or LTE-Advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. However, in the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

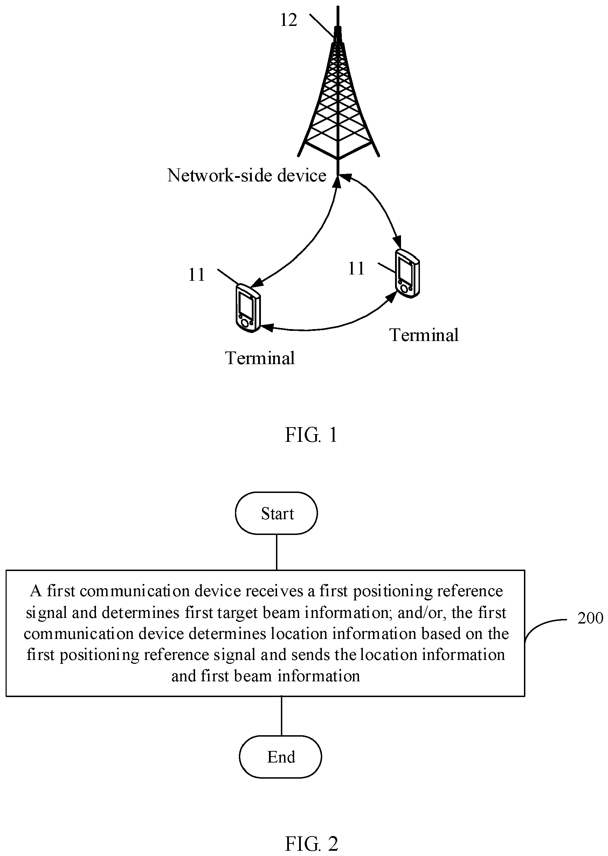

FIG 1 is a block diagram of a wireless communication system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes: a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

Related techniques included in this application are introduced below.

For measurement on angle of departure (Angle of Departure, AOD) of downlink signals, multiple reference signal received powers (Reference Signal Received Power, RSRP) are measured to select a corresponding beam, and for a beam with large energy, identification information of the beam or positioning reference signal (Positioning Reference Signal, PRS) is reported.

On a transmit side (for example, a base station side), identification information of beams is identified based on identification information of PRSs, different beams send different PRSs, and different PRSs include different angle information.

On a receive side (for example, a UE side), currently, only when the UE has found through measurement that a beam has been used more than twice, receive beam identification information (nr-DL-PRS-RxBeamIndex) is reported, without including other information.

Since massive antennas being used, UE uses multiple panels to send signals at high frequencies (such as frequency range 2, Frequency Range 2, FR2), for example, using two back-to-back panels or four panels on four sides of the UE. Different panels correspond to different radio frequency components, resulting in different deviations caused by components of different panels.

The related positioning method has the following problems:

When the receive beam (beam) is not used to receive RSRPs of other reported PRSs, the network side cannot learn about receive beam identification information of the receive side.

The network side cannot learn whether the receive beam identification information sent by the receive side corresponds to a same panel, and therefore cannot remove an error resulting from different link errors. In addition, the same beam identification information (such as the same beam index) for different panels correspond to different angles of arrival, which may cause angle detection mistakes.

The following describes in detail a positioning method and apparatus, a device, and a storage medium provided in the embodiments of this application by using specific embodiments and application scenarios thereof with reference to the accompanying drawings.

FIG. 2 is a schematic flowchart of a positioning method according to an embodiment of this application. The method is executed by a first communication device, and the first communication device may be a terminal or a base station. As shown in FIG. 2, the method includes the following steps.

Step 200: The first communication device receives a first positioning reference signal and determines first target beam information;
and/or,
the first communication device determines location information based on the first positioning reference signal and sends the location information and first beam information.

It can be understood that the first communication device is a receive-side device of the first positioning reference signal.

Optionally, when the first communication device is a terminal, the first positioning reference signal is a downlink positioning reference signal; and when the first communication device is a base station, the first positioning reference signal is an uplink positioning reference signal.

Optionally, the first communication device receives a first positioning reference signal and determines first target beam information.

The first target beam information is information about a beam for receiving the first positioning reference signal.

The first target beam information includes at least one of the following:
receive beam identification information corresponding to a beam for receiving the first positioning reference signal;
receive beam pattern information or response information corresponding to the beam for receiving the first positioning reference signal;
receive beam direction information corresponding to the beam for receiving the first positioning reference signal;
receive beam width information corresponding to the beam for receiving the first positioning reference signal; and
receive antenna information of the first communication device.

Optionally, during determining of the first target beam information, the first communication device first determines a receive beam for receiving the first positioning reference signal, which may alternatively be understood as a beam for receiving the first positioning reference signal.

Different beams correspond to different beam identification information, such as a beam ID.

In an optional implementation, the first communication device may determine, through beam scanning, a beam with the largest RSRP as the receive beam for receiving the first positioning reference signal, and then may determine receive beam identification information corresponding to the receive beam for receiving the first positioning reference signal.

In an optional implementation, during determining of the receive beam for receiving the first positioning reference signal, the first communication device may determine, based on some configured beam information such as quasi co-location (Quasi Co-Location, QCL) and transmission configuration indicator (Transmission Configuration Indicator, TCI), the receive beam for receiving the first positioning reference signal, and then determine receive beam identification information corresponding to the receive beam for receiving the first positioning reference signal.

It should be noted that after determining the receive beam identification information corresponding to the beam receiving the first positioning reference signal, the first communication device may correspondingly determine receive beam pattern information or response information corresponding to the beam receiving the first positioning reference signal, receive beam direction information corresponding to the beam receiving the first positioning reference signal, receive beam width information corresponding to the beam receiving the first positioning reference signal, and receive antenna information of the first communication device.

Optionally, the first communication device determines location information based on the first positioning reference signal and sends the location information and first beam information. The location information is obtained through location measurement by the first communication device based on the first positioning reference signal. The location information may be obtained by using an angular positioning measurement method (such as AOD or AOA positioning method), a positioning measurement method based on a time difference (for example, a positioning method based on a downlink time difference of arrival (Down Link Time Difference Of Arrival, DL-TDOA), an uplink time difference of arrival (Up Link Time Difference Of Arrival, UL-TDOA), or a round-trip time RTT), or other positioning methods (such as a global positioning system GPS, wireless fidelity Wi-Fi, or Bluetooth positioning method).

Optionally, the location information may include location measurement information and/or positioning result information. The location measurement information is measurement information obtained by the first communication device by measuring the first reference signal; and the positioning result information is positioning result information obtained through location calculation.

The first beam information includes at least one of the following: receive beam identification information; receive beam pattern information or response information; receive beam direction information; receive beam width information; and receive antenna information of the first communication device.

Optionally, the first communication device determines the total number of receive beams based on the number of its own panels and the number of antennas. When the number of receive beams is determined, angles of the receive beams are determined accordingly. Based on the angle of the receive beam, receive beam pattern information or response information, receive beam direction information, and receive beam width information, it can be all determined that each receive beam corresponds to one piece of receive beam identification information, and then other beam information of the beam can be determined based on the identification information. The first beam information is determined according to the above steps, where the first beam information includes corresponding beam information of one or more receive beams.

In this embodiment of this application, the first communication device receives the first positioning reference signal and determines the first target beam information; and/or, determines location information and send the location information and first beam information. The first target beam information is information related to a beam receiving the positioning reference signal. The first beam information includes at least one of receive beam identification information, receive beam pattern information or response information, receive beam direction information, receive beam width information, and receive antenna information of the first communication device. Using such information helps more accurately obtain angle of arrival information to improve positioning accuracy.

Optionally, on the basis of the foregoing embodiment, the following is further included: sending the first target beam information for one or more times, where the first target beam information is used for determining location information of a terminal and/or line of sight (Line of Sight, LOS)/non-line of sight (Non Line of Sight, NLOS) identification information by a network-side device.

It can be understood that the first target beam information is used for determining the location information of the terminal by the network-side device, and/or is used for determining by the network-side device whether LOS/NLOS identification information is present in the beam measurement result.

Optionally, the first communication device sends the first target beam information to the third communication device for one or more times.

In this embodiment of this application, the first communication device sends the first target beam information. In this way, based on the first target beam information reported by the first communication device for one or more times, the third communication device more accurately determines the angle information, determines the location information of the terminal, and/or determines the line-of-sight LOS/non-line-of-sight NLOS identification information, thereby improving positioning accuracy.

Optionally, if the receive beam is a non-line-of- sight NLOS beam, related information of the corresponding NLOS beam may be excluded from the final positioning solution, thereby further improving positioning accuracy.

Optionally, the first beam information may be reported one or more times.

Optionally, the receive beam identification information includes at least one of the following: receive beam identification information based on panel division; receive beam identification information based on division of the first communication device.

In some embodiments, the receive beam identification information may be receive beam identification information obtained through classification at a granularity of panel, and the receive beam identification information may alternatively be receive beam identification information obtained through classification at a granularity of the first communication device.

The receive beam identification information may be an ID of the receive beam, such as 0, 1, 2, ..., and N. For example, the first communication device includes 4 receive panels, each panel having 8 antennas and each panel capable of generating 8 beams. In this case, a total of 4*8=32 beams can be generated, and the receive beam identification information based on panel division is identification information of the eight beams on each panel being 1, 2, ..., and 8. The identification information of each panel is 1, 2, 3, and 4, and each receive beam is uniquely identified by using panel identification information and beam identification information. The beam identification information based on division of the first communication device is all numbers of 32 beams on the 4 panels, with the identification information being 1, 2, ..., and 32. In this way, each receive beam is uniquely identified by the beam identification information.

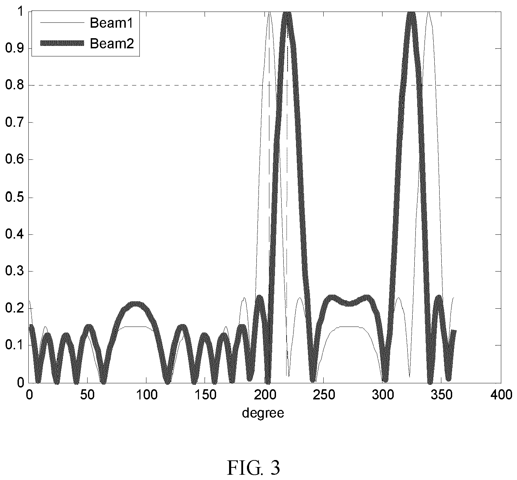

Optionally, the receive beam pattern information or response information includes: energy response information of at least one receive beam corresponding to the receive beam identification information at various angles. For one beam angle, there is a beam pattern (beam pattern), where the beam pattern is energy at all angles (360 degrees) under the beam. FIG. 3 is a schematic diagram of a beam pattern according to an embodiment of this application.

Optionally, the receive beam pattern information or response information includes: energy response information of the receive beam corresponding to the receive beam identification information and one or more adjacent beams at various angles.

Optionally, the receive beam pattern information or response information includes: energy response information of multiple or all receive beams at various angles.

It can be understood that the receive beam pattern information or response information may be reported at one time, that is, the energy response information of the multiple or all receive beams at various angles is reported at one time, for example, the first beam information is reported, where the first beam information includes the energy response information of the multiple or all receive beams.

The energy response information of the beam at various angles may be expressed in one of the following manners:
discrete Fourier transform (Discrete Fourier transform, DFT) coefficient;
a first list, where the first list is a list of at least one angle and energy;
a first set, where the first set is a set of at least one angle and energy;
a second list, where the second list is an energy list obtained according to a preset rule and granularity; and
a second set, where the second set is an energy set obtained according to a preset rule and granularity.

According to a preset rule and granularity, for example, 36 energy values represent 0 degrees, 10 degrees, 20 degrees, ..., and 360 degrees, respectively.

Optionally, the receive beam direction information includes at least one of the following: azimuth information; and vertical inclination information; where the azimuth information is information about an included angle relative to a reference direction, and the reference direction is local direction information of the first communication device or a geographical north direction.

Optionally, the receive beam width information includes at least one of the following:
angle width information of a receive beam corresponding to the receive beam identification information in a case that energy information of the receive beam is greater than a first threshold;
angle width information of the receive beam corresponding to the receive beam identification information in a case that the energy information of the receive beam is greater than a percent A of a maximum energy of the receive beam;
angle width information of the receive beam corresponding to the receive beam identification information in a case that the energy information of the receive beam is equal to energy information of an adjacent beam;
angle width information of the receive beam corresponding to the receive beam identification information in a case that main lobe energy information of the receive beam is greater than a second threshold;
angle width information of the receive beam corresponding to the receive beam identification information in a case that the main lobe energy information of the receive beam is greater than a percent B of a maximum main lobe energy of the receive beam; and
angle width information of the receive beam corresponding to the receive beam identification information in a case that the main lobe energy information of the receive beam is equal to main lobe energy information of the adjacent beam;

It should be noted that the receive beam corresponding to the receive beam identification information is a beam for receiving the first positioning reference signal.

Optionally, width information that meets a condition and that is of the receive beam and one or more adjacent beams is reported, where the receive beam width information includes at least one of the following:
angle width information of a receive beam corresponding to the receive beam identification information in a case that energy information of the receive beam is greater than a third threshold, and angle width information of an adjacent beam in a case that energy information of the adjacent beam is greater than a fourth threshold;
angle width information of the receive beam corresponding to the receive beam identification information in a case that the energy information of the receive beam is greater than a percent C of a maximum energy of the receive beam, and angle width information of the adjacent beam in a case that the energy information of the adjacent beam is greater than a percent D of a maximum energy of the adj acent beam;
angle width information of the receive beam corresponding to the receive beam identification information in a case that the energy information of the receive beam is equal to the energy information of the adjacent beam, and angle width information of the adjacent beam in a case that the energy information of the adjacent beam is equal to the energy information of the receive beam corresponding to the receive beam identification information;
angle width information of the receive beam corresponding to the receive beam identification information in a case that main lobe energy information of the receive beam is greater than a fifth threshold, and angle width information of the adjacent beam in a case that main lobe energy information of the adjacent beam is greater than a sixth threshold;
angle width information of the receive beam corresponding to the receive beam identification information in a case that the main lobe energy information of the receive beam is greater than a percent E of a maximum main lobe energy of the receive beam, and angle width information of the adjacent beam in a case that main lobe energy information of the adjacent beam is greater than a percent F of a maximum main lobe energy of the adj acent beam; and
angle width information of the receive beam corresponding to the receive beam identification information in a case that the main lobe energy information of the receive beam is equal to the main lobe energy information of the adjacent beam, and angle width information of the adjacent beam in a case that the main lobe energy information of the adjacent beam is equal to the main lobe energy information of the receive beam corresponding to the receive beam identification information;

Optionally, the receive beam width information includes at least one of the following:
angle width information of multiple or all receive beams in a case that energy information of the multiple or all receive beams is greater than a seventh threshold;
angle width information of the multiple or all receive beams in a case that the energy information of the multiple or all receive beams is greater than a percent G of maximum energies of the multiple or all receive beams;
angle width information of the multiple or all receive beams in a case that the energy information of the multiple or all receive beams is equal to energy information of an adjacent beam;
angle width information of the multiple or all receive beams in a case that main lobe energy information of the multiple or all receive beams is greater than an eighth threshold;
angle width information of the multiple or all receive beams in a case that the main lobe energy information of the multiple or all receive beams is greater than a percent H of maximum main lobe energies of the multiple or all receive beams; and
angle width information of the multiple or all receive beams in a case that the main lobe energy information of the multiple or all receive beams is equal to main lobe energy information of the adj acent beam; where
A, B, C, D, E, F, G, and H are all natural numbers greater than 0 and less than 100.

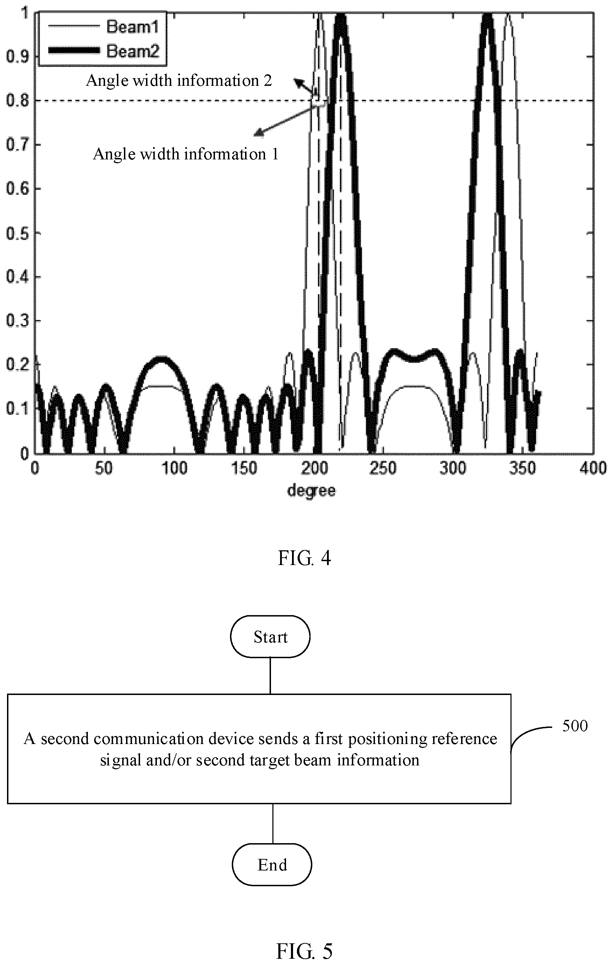

The angle width information is angle width information corresponding to an angle satisfying a corresponding condition on the beam pattern of the receive beam. FIG. 4 is a schematic diagram of angle width information according to an embodiment of this application. For example, the angle width information is angle width information corresponding to an angle whose energy is greater than a first threshold. For another example, the angle width information is angle width information corresponding to an angle whose energy is greater than a percent A of a maximum energy of the beam. For another example, the angle width information is angle width information corresponding to an angle with an energy being equal to the energy of the adjacent beam, where the angle width information may be relative to an angle corresponding to the maximum energy of the beam, or may be relative to a symmetrical angle on the beam pattern.

Optionally, the fourth threshold may be equal to the third threshold.

Optionally, the sixth threshold may be equal to the fifth threshold.

Optionally, the antenna information of the first communication device includes at least one of the following: panel information; intra-panel antenna information; angle information of the first communication device; antenna virtualization information; and calibration information.

Optionally, the panel information includes at least one of the following: panel identification information; panel quantity information; and panel location information.

Optionally, the panel identification information may be a panel ID, such as 1, 2, ..., and M1. In this case, the panel identification information and the receive beam identification information based on panel division may be used together for distinguishing receive beams.

Optionally, the panel identification information may be determined based on the receive beam identification information. For example, there are 16 receive beams in total, and the IDs range from 0 to 15. If the ID is less than 8, it is considered as panel 1; or for another example, if the ID is an odd number, it is considered as panel 1.

Optionally, the panel location information includes at least one of the following: arrangement information of a plurality of panels; panel spacing; and a position of a panel relative to a local coordinate system or a global coordinate system of the first communication device.

Optionally, the intra-panel antenna information includes at least one of the following: antenna identification information; antenna quantity information; antenna location information; and antenna polarization information; where the antenna location information includes at least one of the following: arrangement information of a plurality of antennas, antenna spacing, antenna aperture, and antenna position within a panel.

Optionally, the angle information of the first communication device includes at least one of the following: angle information of a local coordinate system of the first communication device; and a conversion parameter between the local coordinate system of the first communication device and a global coordinate system.

Optionally, the antenna virtualization information includes at least one of the following: transmit and receive unit TXRU virtualization assumption; channel state information reference signal (Channel State Information-Reference Signal, CSI-RS) port mapping information;
sounding reference signal (Sounding reference signal, SRS) port mapping information;
sounding reference signal for positioning (Sounding reference signal for positioning, SRS-pos) port mapping information; and
positioning reference signal PRS port mapping information.

Optionally, the calibration information includes at least one of the following:
whether a receive-transmit time error Rx-Tx timing error has been calibrated for multiple panels;
receive-transmit time error Rx-Tx timing error;
whether a beam angle deviation has been calibrated; and
beam angle deviation.

In some optional embodiments, the sending the first target beam information and/or the first beam information includes:
sending first information, where the first information carries the first target beam information and/or first beam information;

The first information is one of the following:
capability information of the first communication device;
positioning assistance information of the first communication device;
response information of the first communication device;
positioning information updating information of the first communication device;
location measurement information; and
positioning result information.

Optionally, the first target beam information and/or the first beam information may be carried in the capability information of the first communication device, the positioning assistance information of the first communication device, the response information of the first communication device, and the positioning information updating information of the first communication device, location measurement information, or positioning result information, and then reported to the network-side device.

Optionally, the first communication device sends the first information to the third communication device.

In some optional embodiments, the sending the first target beam information includes:
sending second information, where the second information carries the first target beam information and/or an angular positioning measurement result.

The angular positioning measurement result includes at least one of the following:
positioning reference signal identification information corresponding to angular positioning measurement;
energy information;
time measurement information;
K-factor information;
timestamp information;
a fifth list, where the fifth list is a correspondence between energy information and transmit-receive beam pairs; and
one or more pieces of additional angle measurement information.

The additional angle measurement information includes at least one of the following:
angle information corresponding to an additional path;
energy information corresponding to the additional path;
time measurement information corresponding to the additional path;
K-factor information corresponding to the additional path;
timestamp information corresponding to the additional path;
receive beam identification information corresponding to the additional path; and
receive antenna information corresponding to the additional path.

The first target beam information includes at least one of the following:
receive beam identification information corresponding to a beam for receiving the first positioning reference signal; and
receive antenna information of the first communication device.

Optionally, the first communication device sends second information to the third communication device, where the second information carries the first target beam information and/or an angular positioning measurement result.

When the first positioning reference signal is a downlink positioning reference signal, the positioning method for use is an AOD positioning method, and the angular positioning measurement result is an AOD measurement result. When the first positioning reference signal is an uplink positioning reference signal, the positioning method for use is a signal angle of arrival (Angle of Arrival, AOA) positioning method, and the angular positioning measurement result is an AOA measurement result.

The energy information includes at least one of the following: RSRP; reference signal received quality (Reference Signal Receiving Quality, RSRQ); RSRP difference; and RSRQ difference.

The time measurement information includes at least one of the following: reference signal arrival time difference RSTD of a reference path, time of arrival TOA of the reference path, and receive-transmit time difference Rx-Tx timing difference of the reference path. The reference path is a path corresponding to angle measurement, such as a heading path or multipath.

The K-factor information (K-factor) is used to represent an energy ratio or energy function between a line-of-sight path (LOS path) and other paths.

The timestamp information includes at least one of the following: a system frame (System Frame Number, SFN) number; a slot (slot) number; and a subframe (subframe) number.

The fifth list is a correspondence between energy information and transmit-receive beam pairs.

For example, 4 RSRPs are obtained through measurement for two transmit beams, namely transmit beam 1 and transmit beam 2, and two receive beams, respectively receive beam 1 and receive beam 2. The correspondence includes:
transmit Beam 1, receive beam 1, RSRP1;
transmit Beam 1, receive beam 2, RSRP2;
transmit Beam 2, receive beam 1, RSRP3; and
transmit Beam 2, receive beam 2, RSRP4.

When the measured energy information corresponds to RSRP1, the fifth list is f transmit beam 1, receive beam 1}.

Optionally, in a case that the second information carries the first target beam information and/or angular positioning measurement result, the first target beam information includes: receive beam identification corresponding to a beam for receiving the first positioning reference signal information; and/or, antenna information of the first communication device.

In this embodiment of this application, the first communication device sends the second information to the network side, and the network side applies the second information to perform more accurate positioning, thereby improving positioning accuracy.

Optionally, the second information includes at least one of the following:
second information of a second positioning reference signal, where one or more transmit beams adjacent to a third transmit beam are used to transmit the second positioning reference signal, and the third transmit beam is a transmit beam corresponding to a receive beam corresponding to the receive beam identification information; and
second information of a third positioning reference signal, where one or more transmit beams corresponding to a same receive beam are used to transmit the third positioning reference signal.

It can be understood that one transmit beam corresponds to one positioning reference signal, and one or more transmit beams adjacent to the transmit beam corresponding to the transmit beam identification information also have corresponding reference signals. Sending the second information of this reference signal helps improve accuracy of angle measurement, and/or to facilitates LOS/NLOS identification.

Similarly, the transmit beam corresponding to the transmit beam identification information has one receive beam on the receive side, and sending the second information of the positioning reference signals with the same receive beam helps improve accuracy of angle measurement, and/or to facilitates LOS/NLOS identification.

In some optional embodiments, before the sending the first target beam information and/or the first beam information, the method further includes:
receiving capability request information of the first communication device sent by a third communication device, and/or sending the capability information of the first communication device to the third communication device.

The capability request information of the first communication device or the capability information of the first communication device includes at least one of the following:
supporting multi-panel receive beam or not supporting multi-panel receive beam;
supporting multi-panel receive beam reporting or not supporting multi-panel receive beam reporting;
supporting receive beam identification information based on panel division or not supporting receive beam identification information based on panel division;
supporting receive beam identification information based on division of the first communication device or not supporting receive beam identification information based on division of the first communication device;
supporting reporting of panel information or not supporting reporting of panel information;
supporting reporting of intra-panel antenna information or not supporting reporting of intra-panel antenna information;
supporting reporting of angle information of the first communication device or not supporting reporting of angle information of the first communication device;
supporting reporting of antenna virtualization information or not supporting reporting of antenna virtualization information;
supporting reporting of calibration information or not supporting reporting of calibration information;
supporting calibration of Rx-Tx timing error between panels or not supporting calibration of Rx-Tx timing error between panels;
supporting angle measurement for multi-TXRU or not supporting angle measurement for multi-TXRU;
supporting LOS/NLOS identification or not supporting LOS/NLOS identification;
supporting reporting of additional angle information or not supporting reporting of additional angle information; and
supporting reporting of angle information and corresponding time and/or capability information or not supporting reporting of angle information and corresponding time and/or capability information.

Optionally, when the first communication device is a terminal, the terminal receives the terminal capability request information sent by the third communication device, and/or sends the terminal capability information to the third communication device.

In some optional embodiments, the positioning method further includes:
receiving third information.

The third information includes at least one of the following:
location information of the first communication device;
location information of the second communication device;
second target beam information; and
second beam information.

Optionally, the second target beam information includes at least one of the following:
transmit beam identification information corresponding to a beam for sending the first positioning reference signal;
transmit beam pattern information or response information corresponding to the beam for sending the first positioning reference signal;
transmit beam direction information corresponding to the beam for sending the first positioning reference signal;
transmit beam width information corresponding to the beam for sending the first positioning reference signal; and
transmit antenna information of the second communication device.

Optionally, the second beam information includes at least one of the following:
transmit beam identification information;
transmit beam pattern information or response information;
transmit beam direction information;
transmit beam width information; and
transmit antenna information of the second communication device.

Optionally, on the basis of the foregoing embodiments, the method further includes:
based on at least one of the third information, the first target beam information, and the first beam information, determining whether LOS/NLOS identification information is present in a beam measurement result, and/or determining a precise location information of the terminal.

Optionally, the first communication device receives third information sent by the third communication device, where the third information includes at least one of location information of the first communication device, location information of the second communication device, second target beam information, and second beam information. Based on at least one of the third information, the first target beam information, and the first beam information, whether LOS/NLOS identification information is present in the beam measurement result is determined, and/or the precise location information of the terminal is determined. Due to introduction of one or more of the first target beam information, the first beam information, the second target beam information, the second beam information, the location information of the first communication device, and the location information of the second communication device, the first communication device can more accurately implement location measurement and positioning solution, thereby improving positioning accuracy.

In some optional embodiments, the positioning method further includes:
sending the LOS/NLOS identification information.

Optionally, if LOS/NLOS identification information is present in the beam measurement result, the first communication device sends the LOS/NLOS identification information to the third communication device, so as to assist the third communication device in implementing positioning solution.

In some optional embodiments, the positioning method further includes:
receiving fourth information, where the fourth information is used to indicate receive beam information of the first communication device.

The fourth information includes at least one of the following:
positioning reference signal identification information;
receive beam identification information of the first communication device;
receive antenna information of the first communication device.
panel or TXRU indication information; and
an error calibration result between panels.

The panel or TXRU indication information is used to indicate whether the first communication device uses one panel or multiple panels to generate receive beams.

Optionally, when multiple panels are indicated, panel quantity, panel identifiers, and/or error calibration result between panels may be further indicated.

Optionally, the first communication device receives fourth information sent by the third communication device, where the fourth information is used by the third communication device to guide the first communication device to select the receive beam of the positioning reference signal. The third communication device indicates, to the first communication device, information about a receive beam considered to be optimal by the third communication device. The first communication device may choose to determine, based on the information about the receive beam, a receive beam for receiving the positioning reference signal, or determines by itself a receive beam for receiving the positioning reference signal.

Optionally, when the first communication device is a base station, the transmit beam information indicated by the fourth information is reference transmit beam information of a downlink positioning reference signal; or when the first communication device is a terminal, the transmit beam information indicated by the fourth information is reference transmit beam information of an uplink positioning reference signal.

On the basis of the foregoing embodiments, the positioning method further includes:
determining a receive beam based on the fourth information, or determining a receive beam by the first communication device itself.

In some optional embodiments, the positioning method further includes:
receiving fifth information, where the fifth information is direction information of the first communication device or direction information of a beam of the first communication device.

Optionally, the first communication device may alternatively receive fifth information sent by the third communication device. The first communication device performs LOS/NLOS identification based on the direction information of the first communication device, the direction information of the beam of the first communication device, and direction information of the beam determined through actual measurement, so as to improve measurement accuracy and positioning accuracy.

FIG. 5 is a second schematic flowchart of a positioning method according to an embodiment of this application. The method is executed by a second communication device, and the second communication device may be a base station or a terminal.

It can be understood that the second communication device is a transmit-side device of a first positioning reference signal.

When the first communication device is a terminal, the second communication device is a base station, and the first positioning reference signal is a downlink positioning reference signal.

When the first communication device is a base station, the second communication device is a terminal, and the first positioning reference signal is an uplink positioning reference signal.

As shown in FIG. 5, the method includes:

Step 500: The second communication device sends a first positioning reference signal and/or second target beam information.

The first positioning reference signal is used for determining location information and/or first target beam information by a first communication device; and

The second target beam information is information about a beam for sending the first positioning reference signal, and the second target beam information includes at least one of the following:
transmit beam identification information corresponding to a beam for sending the first positioning reference signal;
transmit beam pattern information or response information corresponding to the beam for sending the first positioning reference signal;
transmit beam direction information corresponding to the beam for sending the first positioning reference signal;
transmit beam width information corresponding to the beam for sending the first positioning reference signal; and
transmit antenna information of the second communication device.

Optionally, the second communication device sends the first positioning reference signal, the second communication device determines the second target beam information, and the second communication device sends the second target beam information to the first communication device or a third communication device.

In this embodiment of this application, the first positioning reference signal and/or the second target beam information is sent, where the second target beam information includes at least one of the transmit beam identification information, transmit beam pattern information or response information, transmit beam direction information, transmit beam width information, and transmit antenna information of the second communication device. Using such information helps the first communication device or the third communication device to perform LOS/NLOS identification and/or location calculation, thereby improving positioning accuracy.

In some optional embodiments, the positioning method further includes:
sending second beam information to the first communication device and/or a third communication device.

The second beam information includes at least one of the following:
transmit beam identification information;
transmit beam pattern information or response information;
transmit beam direction information;
transmit beam width information; and
transmit antenna information of the second communication device.

Optionally, the second communication device sends the second beam information to the first communication device and/or the third communication device, and the second beam information is used for implementing LOS /NLOS identification and/or position solution by the first communication device and/or the third communication device.

The third communication device is a core network device, for example, may be an LMF.

Optionally, the transmit beam identification information includes at least one of the following:
transmit beam identification information based on panel division; and
transmit beam identification information based on division of the second communication device.

Optionally, the transmit beam pattern information or response information includes:
energy response information of at least one transmit beam corresponding to the transmit beam identification information at various angles;
   or,
energy response information of a transmit beam corresponding to the transmit beam identification information and one or more adjacent beams at various angles;
   or,
energy response information of multiple or all transmit beams at various angles.

The energy response information of the beam at various angles is expressed in one of the following manners:
discrete Fourier transform DFT coefficient;
a third list, where the third list is a list of at least one angle and energy;
a third set, where the third set is a set of at least one angle and energy;
a fourth list, where the fourth list is an energy list obtained according to a preset rule and granularity; and
a fourth set, where the fourth set is a energy set obtained according to a preset rule and granularity.

Optionally, the transmit beam direction information includes at least one of the following:
azimuth information; and
vertical inclination information.

The azimuth information is information about an included angle relative to a reference direction, and the reference direction is local direction information of the second communication device or a geographical north direction.

Optionally, the transmit beam width information includes at least one of the following:
angle width information of a transmit beam corresponding to the transmit beam identification information in a case that energy information of the transmit beam is greater than a ninth threshold;
angle width information of the transmit beam corresponding to the transmit beam identification information in a case that the energy information of the transmit beam is greater than a percent I of a maximum energy of the transmit beam;
angle width information of the transmit beam corresponding to the transmit beam identification information in a case that the energy information of the transmit beam is equal to energy information of an adjacent beam;
angle width information of a transmit beam corresponding to the transmit beam identification information in a case that main lobe energy information of the transmit beam is greater than a tenth threshold;
angle width information of the transmit beam corresponding to the transmit beam identification information in a case that the main lobe energy information of the transmit beam is greater than a percent J of a maximum main lobe energy of the transmit beam; and
angle width information of the transmit beam corresponding to the transmit beam identification information in a case that the main lobe energy information of the transmit beam is equal to main lobe energy information of an adjacent beam;
   or,
the transmit beam width information includes at least one of the following:
   angle width information of a transmit beam corresponding to the transmit beam identification information in a case that energy information of the transmit beam is greater than an eleventh threshold, and angle width information of an adjacent beam in a case that energy information of the adjacent beam is greater than a twelfth threshold;
   angle width information of the transmit beam corresponding to the transmit beam identification information in a case that the energy information of the transmit beam is greater than a percent K of a maximum energy of the transmit beam, and angle width information of the adjacent beam in a case that the energy information of the adjacent beam is greater than a percent L of a maximum energy of the adjacent beam;
   angle width information of the transmit beam corresponding to the transmit beam identification information in a case that the energy information of the transmit beam is equal to the energy information of the adjacent beam, and angle width information of the adjacent beam in a case that the energy information of the adjacent beam is equal to the energy information of the transmit beam corresponding to the transmit beam identification information;
   angle width information of a transmit beam corresponding to the transmit beam identification information in a case that main lobe energy information of the transmit beam is greater than a thirteenth threshold, and angle width information of the adjacent beam in a case that main lobe energy information of the adjacent beam is greater than a fourteenth threshold;
   angle width information of the transmit beam corresponding to the transmit beam identification information in a case that the main lobe energy information of the transmit beam is greater than a percent M of a maximum main lobe energy of the transmit beam corresponding to the transmit beam identification information, and angle width information of the adjacent beam in a case that the main lobe energy information of the adjacent beam is greater than a percent N of a maximum main lobe energy of the adj acent beam; and
   angle width information of the transmit beam corresponding to the transmit beam identification information in a case that the main lobe energy information of the transmit beam is equal to the main lobe energy information of the adjacent beam, and angle width information of the adjacent beam in a case that the main lobe energy information of the adjacent beam is equal to the main lobe energy information of the transmit beam corresponding to the transmit beam identification information;
      or,
   the transmit beam width information includes at least one of the following:
      angle width information of multiple or all transmit beams in a case that energy information of the multiple or all transmit beams is greater than a fifteenth threshold;
      angle width information of the multiple or all transmit beams in a case that the energy information of the multiple or all transmit beams is greater than a percent O of maximum energies of the multiple or all transmit beams;
      angle width information of the multiple or all transmit beams in a case that the energy information of the multiple or all transmit beams is equal to energy information of an adjacent beam;
      angle width information of the multiple or all transmit beams in a case that main lobe energy information of the multiple or all transmit beams is greater than a sixteenth threshold;
      angle width information of the multiple or all transmit beams in a case that the main lobe energy information of the multiple or all transmit beams is greater than a percent P of maximum main lobe energies of the multiple or all transmit beams; and
      angle width information of the multiple or all transmit beams in a case that the main lobe energy information of the multiple or all transmit beams is equal to main lobe energy information of the adjacent beam; where
      I, J, K, L, M, N, O, and P are all natural numbers greater than 0 and less than 100.

The angle width information is angle width information corresponding to an angle satisfying a corresponding condition on the beam pattern of the receive beam. For example, the angle width information is angle width information corresponding to an angle whose energy is greater than a first threshold. For another example, the angle width information is angle width information corresponding to an angle whose energy is greater than a percent A of a maximum energy of the beam. For another example, the angle width information is angle width information corresponding to an angle with an energy being equal to the energy of the adjacent beam, where the angle width information may be relative to an angle corresponding to the maximum energy of the beam, or may be relative to a symmetrical angle on the beam pattern.

Optionally, the eleventh threshold may be equal to the twelfth threshold.

Optionally, the thirteenth threshold may be equal to the fourteenth threshold.

Optionally, the transmit antenna information of the second communication device includes at least one of the following:
panel information;
intra-panel antenna information;
angle information of the second communication device;
antenna virtualization information; and
calibration information.

Optionally, the panel information includes at least one of the following:
panel identification information;
panel quantity information; and
panel location information.

The panel location information includes at least one of the following: arrangement information of a plurality of panels; panel spacing; and a position of a panel relative to a local coordinate system of the second communication device or a global coordinate system.

Optionally, the intra-panel antenna information includes at least one of the following:
antenna identification information;
antenna quantity information;
antenna location information; and
antenna polarization information.

The antenna location information includes at least one of the following: arrangement information of a plurality of antennas, antenna spacing, antenna aperture, and antenna position within a panel.

Optionally, the angle information of the second communication device includes at least one of the following:
angle information of a local coordinate system of the second communication device; and
a conversion parameter between the local coordinate system of the second communication device and a global coordinate system.

Optionally, the antenna virtualization information includes at least one of the following:
transmit and receive unit TXRU virtualization assumption;
channel state information reference signal CSI-RS port mapping information;
sounding reference signal SRS port mapping information;
sounding reference signal for positioning SRS-pos port mapping information; and
positioning reference signal PRS port mapping information.

Optionally, the calibration information includes at least one of the following:
whether a receive-transmit time error Rx-Tx timing error has been calibrated for multiple panels;
receive-transmit time error Rx-Tx timing error;
whether a beam angle deviation has been calibrated; and beam angle deviation.

In some optional embodiments, the sending the second target beam information and/or the second beam information includes:
sending seventh information, where the seventh information carries the second target beam information and/or second beam information.

The seventh information is one of the following:
capability information of the second communication device;
positioning assistance information of the second communication device;
response information of the second communication device;
positioning information updating information of the second communication device;
location measurement information; and
positioning result information.

It can be understood that the second target beam information and/or the second beam information may be carried in the capability information of the second communication device, the positioning assistance information of the second communication device, the response information of the second communication device, and the positioning information updating information of the second communication device, location measurement information, or positioning result information, and is then reported to the first communication device and/or the third communication device.

On the basis of the foregoing embodiments, optionally, before the sending the second target beam information or the second beam information, the method further includes:
receiving capability request information of the second communication device sent by a third communication device, and/or sending the capability information of the second communication device to the third communication device.

The capability request information of the second communication device or the capability information of the second communication device includes at least one of the following:
supporting multi-panel transmit beam or not supporting multi-panel transmit beam;
supporting multi-panel transmit beam reporting or not supporting multi-panel transmit beam reporting;
supporting transmit beam identification information based on panel division or not supporting transmit beam identification information based on panel division;
supporting transmit beam identification information based on division of the second communication device or not supporting transmit beam identification information based on division of the second communication device;
supporting reporting of panel information or not supporting reporting of panel information;
supporting reporting of intra-panel antenna information or not supporting reporting of intra-panel antenna information;
supporting reporting of angle information of the second communication device or not supporting reporting of angle information of the second communication device;
supporting reporting of antenna virtualization information or not supporting reporting of antenna virtualization information;
supporting reporting of calibration information or not supporting reporting of calibration information;
supporting calibration of Rx-Tx timing error between panels or not supporting calibration of Rx-Tx timing error between panels;
supporting angle measurement for multi-TXRU or not supporting angle measurement for multi-TXRU;
supporting LOS/NLOS identification or not supporting LOS/NLOS identification;
supporting reporting of additional angle information or not supporting reporting of additional angle information; and
supporting reporting of angle information and corresponding time and/or capability information or not supporting reporting of angle information and corresponding time and/or capability information.

In some optional embodiments, the positioning method further includes:
sending an angular positioning measurement result; where

Optionally, the second communication device sends an angular positioning measurement result to the third communication device.

The angular positioning measurement result includes at least one of the following:
positioning reference signal identification information corresponding to angular positioning measurement;
energy information;
time measurement information;
K-factor information;
timestamp information;
a sixth list, where the sixth list is a correspondence between energy information and transmit-receive beam pairs; and
one or more pieces of additional angle measurement information; where

The additional angle measurement information includes at least one of the following:
angle information corresponding to an additional path;
energy information corresponding to the additional path;
time measurement information corresponding to the additional path;
K-factor information corresponding to the additional path;
timestamp information corresponding to the additional path;
receive beam identification information corresponding to the additional path; and
receive antenna information corresponding to the additional path.

The energy information includes at least one of the following: RSRP; RSRQ; RSRP difference; and RSRQ difference.

The time measurement information includes at least one of the following: RSTD of a reference path, TOA of the reference path, and Rx-Tx timing difference of the reference path, where the reference path is a path corresponding to angle measurement, such as a heading path or multipath.

The K-factor information (K-factor) is used to represent an energy ratio or energy function between a line-of-sight path (LOS path) and other paths.

The timestamp information includes at least one of the following: a system frame SFN number; a slot (slot) number; and a subframe (subframe) number.

In some optional embodiments, the positioning method further includes:
receiving first target beam information and/or receiving first beam information;

Optionally, the second communication device receives the first target beam information sent by the first communication device or the third communication device, and/or receives the first beam information sent by the first communication device or the third communication device.

The first target beam information includes at least one of the following:
receive beam identification information corresponding to a beam for receiving the first positioning reference signal;
receive beam pattern information or response information corresponding to the beam for receiving the first positioning reference signal;
receive beam direction information corresponding to the beam for receiving the first positioning reference signal;
receive beam width information corresponding to the beam for receiving the first positioning reference signal; and
receive antenna information of the first communication device.

The first beam information includes at least one of the following:
receive beam identification information;
receive beam pattern information or response information;
receive beam direction information;
receive beam width information; and
receive antenna information of the first communication device.

On the basis of the foregoing embodiments, optionally, the positioning method further includes:
based on the first target beam information and/or the first beam information, and the second target beam information and/or the second beam information, determining whether LOS/NLOS identification information is present in a beam measurement result.

Optionally, based on at least one of the first target beam information and the first beam information and at least one of the second target beam information and the second beam information, the second communication device determines whether LOS/NLOS identification information is present in the beam measurement result, and the second communication device can more accurately identify the LOS/NLOS status based on the first target beam information and/or the first beam information and the second target beam information and/or the second beam information, thereby improving measurement accuracy and positioning accuracy.

On the basis of the foregoing embodiments, the positioning method further includes:
if the LOS/NLOS identification information is present in the beam measurement result, sending the LOS/NLOS identification information to the first communication device and/or a third communication device.

If determining that LOS/NLOS identification information is present in the beam measurement result, the second communication device sends the LOS/NLOS identification information to the first communication device and/or the third communication device, so that the first communication device and/or the third communication device excludes the result corresponding to the NLOS identification information during positioning solution, thereby improving identification accuracy.

In some optional embodiments, the positioning method further includes:
receiving sixth information, where the sixth information is used to indicate transmit beam information of the second communication device.

The sixth information includes at least one of the following:
positioning reference signal identification information;
transmit beam identification information of the second communication device;
transmit antenna information of the second communication device;
panel or TXRU indication information; and
an error calibration result between panels.

The panel or TXRU indication information is used to indicate whether the second communication device uses one panel or multiple panels to generate transmit beams.

Optionally, when multiple panels are indicated, panel quantity, panel identifiers, and/or error calibration result between panels may be further indicated.

It can be understood that the second communication device receives sixth information sent by the third communication device, where the sixth information is used by the third communication device to indicate the second communication device to select the transmit beam of the positioning reference signal. The third communication device indicates, to the second communication device, information about a transmit beam considered to be optimal by the third communication device. The second communication device may choose to determine, based on the transmit beam information, a transmit beam for sending the positioning reference signal, or determines by itself a transmit beam for sending the positioning reference signal.

In some optional embodiments, the positioning method further includes:
determining a transmit beam based on the sixth information, or determining a transmit beam by the second communication device itself.

In this embodiment of this application, the second communication device receives related beam information sent by the third communication device, so as to more accurately perform positioning solution and/or identify LOS/NLOS status, and determine the beam for sending the positioning reference signal.

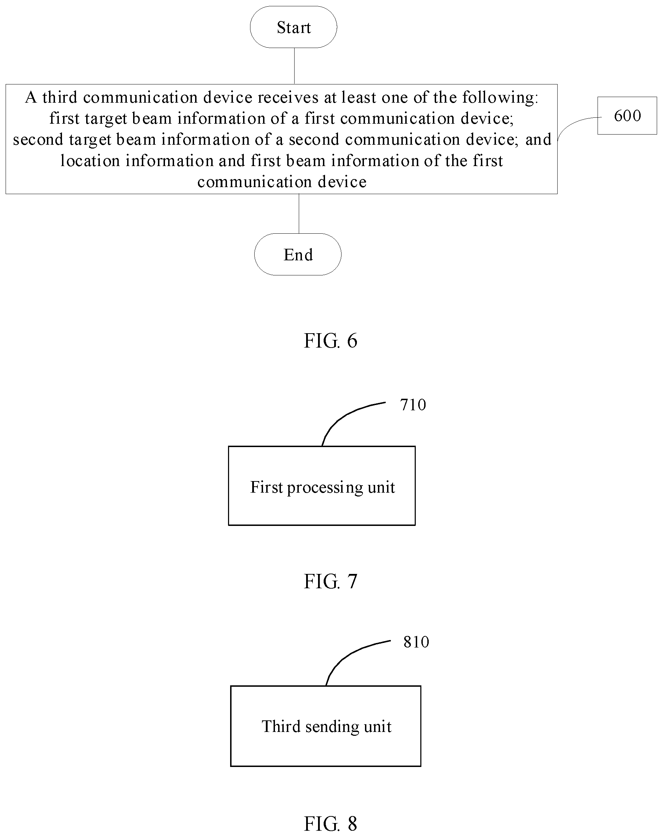

FIG. 6 is a third schematic flowchart of a positioning method according to an embodiment of this application. The method is executed by a third communication device, and the third communication device may be a core network device, for example, an LMF.

As shown in FIG. 6, the method includes:

Step 600: The third communication device receives at least one of the following:
first target beam information of a first communication device;
second target beam information of a second communication device; and
location information and first beam information of the first communication device.

The first target beam information includes at least one of the following:
receive beam identification information corresponding to a beam for receiving the first positioning reference signal;
receive beam pattern information or response information corresponding to the beam for receiving the first positioning reference signal;
receive beam direction information corresponding to the beam for receiving the first positioning reference signal;
receive beam width information corresponding to the beam for receiving the first positioning reference signal; and
receive antenna information of the first communication device.

The first beam information includes at least one of the following:
receive beam identification information;
receive beam pattern information or response information
receive beam direction information;
receive beam width information; and
receive antenna information of the first communication device.

The second target beam information includes at least one of the following:
transmit beam identification information corresponding to a beam for sending the first positioning reference signal;
transmit beam pattern information or response information corresponding to the beam for sending the first positioning reference signal;
transmit beam direction information corresponding to the beam for sending the first positioning reference signal;
transmit beam width information corresponding to the beam for sending the first positioning reference signal; and
transmit antenna information of the second communication device.

For understanding of the first beam information and the second beam information, reference may be made to the foregoing embodiments, and details are not repeated herein.

In this embodiment of this application, the third communication device receives at least one of the first target beam information of the first communication device, the second target beam information of the second communication device, the location information of the first communication device, and the first beam information. Using such information helps the third communication device to accurately implement positioning solution, thereby improving positioning accuracy.

On the basis of the foregoing embodiments, optionally, the positioning method further includes:
receiving second beam information of the second communication device.

The second beam information includes:
transmit beam identification information;
transmit beam pattern information or response information;
transmit beam direction information;
transmit beam width information; and
transmit antenna information of the second communication device.

In this embodiment of this application, the third communication device receives at least one of the first target beam information of the first communication device, the second target beam information of the second communication device, the location information of the first communication device, the first beam information, and the second beam information. Using such information helps the third communication device to accurately implement positioning solution, thereby improving positioning accuracy.

On the basis of the foregoing embodiments, optionally, the positioning method further includes:
based on the first beam information and/or the first target beam information, and the second beam information and/or the second target beam information, determining whether LOS/NLOS identification information is present in a beam measurement result.

In this embodiment of this application, the third communication device determines the line-of-sight LOS/non-line-of-sight NLOS identification information based on the first beam information and/or the first target beam information and the second beam information and/or the second target beam information, thereby improving positioning accuracy.

Optionally, on the basis of the foregoing embodiments, optionally, the method further includes:
if the LOS/NLOS identification information is present, sending the LOS/NLOS identification information to the first communication device and/or the second communication device.

In this embodiment of this application, the third communication device sends the LOS/NLOS identification information to the first communication device and/or the second communication device, so that the first communication device and/or the second communication device can directly use the LOS/non-line-of-sight NLOS identification information, thereby improving positioning accuracy.

Optionally, on the basis of the foregoing embodiments, optionally, the method further includes:
sending third information to the first communication device.

The third information includes at least one of the following:
location information of the first communication device;
location information of the second communication device;
second target beam information; and
second beam information.

Optionally, the third communication device sends the third information to the first communication device, so that the first communication device determines, based on at least one of the third information, the first target beam information, and the first beam information, whether LOS/NLOS identification information is present in the beam measurement result, or determines the precise location information of the terminal.

Optionally, on the basis of the foregoing embodiments, optionally, the method further includes:
sending fourth information to the first communication device, where the fourth information is used to indicate receive beam information of the first communication device.

The fourth information includes at least one of the following:
positioning reference signal identification information;
receive beam identification information of the first communication device;
receive antenna information of the first communication device;
panel or transmit and receive unit TXRU indication information; and
an error calibration result between panels.

It can be understood that the fourth information is used by the third communication device to guide the first communication device to select the receive beam of the positioning reference signal.

Optionally, on the basis of the foregoing embodiments, optionally, the method further includes:
sending fifth information to the first communication device, where the fifth information is direction information of the first communication device or direction information of a beam of the first communication device.

It can be understood that the third communication device sends the fifth information to the first communication device, so that the first communication device performs LOS/NLOS identification based on the direction information of the first communication device, the direction information of the beam of the first communication device, and the beam direction information determined through actual measurement, thereby improving measurement accuracy and positioning accuracy.

Optionally, on the basis of the foregoing embodiments, optionally, the method further includes:
sending sixth information to the second communication device, where the sixth information is used to indicate transmit beam information of the second communication device.

The sixth information includes at least one of the following:
positioning reference signal identification information;
transmit beam identification information of the second communication device;
transmit antenna information of the second communication device;
panel or TXRU indication information; and
an error calibration result between panels.

The panel or TXRU indication information is used to indicate whether the first communication device uses one panel or multiple panels to generate receive beams.

Optionally, the sixth information is used by the third communication device to indicate the second communication device to select the transmit beam of the positioning reference signal.

Optionally, the receiving first beam information includes:
receiving first information, where the first information carries the first target beam information and/or first beam information.

The first information is one of the following:
capability information of the first communication device;
positioning assistance information of the first communication device;
response information of the first communication device;
positioning information updating information of the first communication device;
location measurement information; and
positioning result information.

Optionally, second information is received, where the second information carries the first target beam information and/or an angular positioning measurement result.

The angular positioning measurement result includes at least one of the following:
positioning reference signal identification information corresponding to angular positioning measurement;
energy information;
time measurement information;
K-factor information;
timestamp information;
a fifth list, where the fifth list is a correspondence between energy information and transmit-receive beam pairs; and
one or more pieces of additional angle measurement information.

The additional angle measurement information includes at least one of the following:
angle information corresponding to an additional path;
energy information corresponding to the additional path;
time measurement information corresponding to the additional path;
K-factor information corresponding to the additional path;
timestamp information corresponding to the additional path;
receive beam identification information corresponding to the additional path; and
receive antenna information corresponding to the additional path.

The first target beam information includes at least one of the following:
receive beam identification information corresponding to a beam for receiving the first positioning reference signal; and
receive antenna information of the first communication device.

Optionally, the second information includes at least one of the following:
second information of a second positioning reference signal, where one or more transmit beams adjacent to a third transmit beam are used to transmit the second positioning reference signal, and the third transmit beam is a transmit beam corresponding to a receive beam corresponding to the receive beam identification information; and
second information of a third positioning reference signal, where one or more transmit beams corresponding to a same receive beam are used to transmit the third positioning reference signal.

In this embodiment of this application, the third communication device receives the second information sent by the terminal, and can perform positioning more accurately based on the second information, thereby improving positioning accuracy.

It should be noted that, for the positioning method provided by the embodiments of this application, the execution body may be a positioning apparatus, or a control module for executing the positioning method in the positioning apparatus. In the embodiments of this application, the positioning method being performed by the positioning apparatus is used as an example to describe the positioning apparatus provided in the embodiments of this application.

FIG. 7 is a first schematic structural diagram of a positioning apparatus according to an embodiment of this application. As shown in FIG. 7, the apparatus includes:
a first processing unit 710, configured to receive a first positioning reference signal and determine first target beam information;
   and/or,
determine location information based on the first positioning reference signal and send the location information and first beam information.

The first target beam information is information about a beam receiving the first positioning reference signal, and the first target beam information includes at least one of the following:
receive beam identification information corresponding to a beam for receiving the first positioning reference signal;
receive beam pattern information or response information corresponding to the beam for receiving the first positioning reference signal;
receive beam direction information corresponding to the beam for receiving the first positioning reference signal;
receive beam width information corresponding to the beam for receiving the first positioning reference signal; and
receive antenna information of the first communication device.

The first beam information includes at least one of the following:
receive beam identification information;
receive beam pattern information or response information;
receive beam direction information;
receive beam width information; and
receive antenna information of the first communication device.

Optionally, the apparatus further includes:
a first sending unit, configured to send the first target beam information for one or more times, where the first target beam information is used for determining location information of a terminal and/or line-of-sight LOS/non-line-of-sight NLOS identification information by a network-side device.

Optionally, the receive beam identification information includes at least one of the following:
receive beam identification information based on panel division; and
receive beam identification information based on division of the first communication device.

Optionally, the receive beam pattern information or response information includes:
energy response information of at least one receive beam corresponding to the receive beam identification information at various angles;
   or,
energy response information of a receive beam corresponding to the receive beam identification information and one or more adjacent beams at various angles;
   or,
energy response information of multiple or all receive beams at various angles; where
the energy response information of the beam at various angles is expressed in one of the following manners:
   discrete Fourier transform DFT coefficient;
   a first list, where the first list is a list of at least one angle and energy;
   a first set, where the first set is a set of at least one angle and energy;
   a second list, where the second list is an energy list obtained according to a preset rule and granularity; and
   a second set, where the second set is an energy set obtained according to a preset rule and granularity.

Optionally, the receive beam direction information includes at least one of the following:
azimuth information; and
vertical inclination information; where
the azimuth information is information about an included angle relative to a reference direction, and the reference direction is local direction information of the first communication device or a geographical north direction.

Optionally, the receive beam width information includes at least one of the following:
angle width information of a receive beam corresponding to the receive beam identification information in a case that energy information of the receive beam is greater than a first threshold;
angle width information of the receive beam corresponding to the receive beam identification information in a case that the energy information of the receive beam is greater than a percent A of a maximum energy of the receive beam;
angle width information of the receive beam corresponding to the receive beam identification information in a case that the energy information of the receive beam is equal to energy information of an adjacent beam;
angle width information of the receive beam corresponding to the receive beam identification information in a case that main lobe energy information of the receive beam is greater than a second threshold;
angle width information of the receive beam corresponding to the receive beam identification information in a case that the main lobe energy information of the receive beam is greater than a percent B of a maximum main lobe energy of the receive beam; and
angle width information of the receive beam corresponding to the receive beam identification information in a case that the main lobe energy information of the receive beam is equal to main lobe energy information of the adjacent beam;
   or,
the receive beam width information includes at least one of the following:
   angle width information of a receive beam corresponding to the receive beam identification information in a case that energy information of the receive beam is greater than a third threshold, and angle width information of an adjacent beam in a case that energy information of the adjacent beam is greater than a fourth threshold;
   angle width information of the receive beam corresponding to the receive beam identification information in a case that the energy information of the receive beam is greater than a percent C of a maximum energy of the receive beam, and angle width information of the adjacent beam in a case that the energy information of the adjacent beam is greater than a percent D of a maximum energy of the adjacent beam;
   angle width information of the receive beam corresponding to the receive beam identification information in a case that the energy information of the receive beam is equal to the energy information of the adjacent beam, and angle width information of the adjacent beam in a case that the energy information of the adjacent beam is equal to the energy information of the receive beam corresponding to the receive beam identification information;
   angle width information of the receive beam corresponding to the receive beam identification information in a case that main lobe energy information of the receive beam is greater than a fifth threshold, and angle width information of the adjacent beam in a case that main lobe energy information of the adjacent beam is greater than a sixth threshold;
   angle width information of the receive beam corresponding to the receive beam identification information in a case that the main lobe energy information of the receive beam is greater than a percent E of a maximum main lobe energy of the receive beam, and angle width information of the adjacent beam in a case that main lobe energy information of the adjacent beam is greater than a percent F of a maximum main lobe energy of the adjacent beam; and
   angle width information of the receive beam corresponding to the receive beam identification information in a case that the main lobe energy information of the receive beam is equal to the main lobe energy information of the adjacent beam, and angle width information of the adjacent beam in a case that the main lobe energy information of the adjacent beam is equal to the main lobe energy information of the receive beam corresponding to the receive beam identification information;
      or,
   the receive beam width information includes at least one of the following:
      angle width information of multiple or all receive beams in a case that energy information of the multiple or all receive beams is greater than a seventh threshold;
      angle width information of the multiple or all receive beams in a case that the energy information of the multiple or all receive beams is greater than a percent G of maximum energies of the multiple or all receive beams;
      angle width information of the multiple or all receive beams in a case that the energy information of the multiple or all receive beams is equal to energy information of an adjacent beam;
      angle width information of the multiple or all receive beams in a case that main lobe energy information of the multiple or all receive beams is greater than an eighth threshold;
      angle width information of the multiple or all receive beams in a case that the main lobe energy information of the multiple or all receive beams is greater than a percent H of maximum main lobe energies of the multiple or all receive beams; and
      angle width information of the multiple or all receive beams in a case that the main lobe energy information of the multiple or all receive beams is equal to main lobe energy information of the adjacent beam; where
      A, B, C, D, E, F, G, and H are all natural numbers greater than 0 and less than 100.

Optionally, the receive antenna information of the first communication device includes at least one of the following:
panel information;
intra-panel antenna information;
angle information of the first communication device;
antenna virtualization information; and
calibration information.

Optionally, the panel information includes at least one of the following:
panel identification information;
panel quantity information; and
panel location information; where
the panel location information includes at least one of the following: arrangement information of a plurality of panels; panel spacing; and a position of a panel relative to a local coordinate system or a global coordinate system of the first communication device.

Optionally, the intra-panel antenna information includes at least one of the following:
antenna identification information;
antenna quantity information;
antenna location information; and
antenna polarization information; where
the antenna location information includes at least one of the following: arrangement information of a plurality of antennas, antenna spacing, antenna aperture, and antenna position within a panel.

Optionally, the angle information of the first communication device includes at least one of the following:
angle information of a local coordinate system of the first communication device; and
a conversion parameter between the local coordinate system of the first communication device and a global coordinate system.

Optionally, the antenna virtualization information includes at least one of the following:
transmit and receive unit TXRU virtualization assumption;
channel state information reference signal CSI-RS port mapping information;
sounding reference signal SRS port mapping information;
sounding reference signal for positioning SRS-pos port mapping information; and
positioning reference signal PRS port mapping information.

Optionally, the calibration information includes at least one of the following:
whether a receive-transmit time error Rx-Tx timing error has been calibrated for multiple panels;
receive-transmit time error Rx-Tx timing error;
whether a beam angle deviation has been calibrated; and
beam angle deviation.

Optionally, the sending the first target beam information and/or the first beam information includes:
sending first information, where the first information carries the first target beam information and/or first beam information.

The first information is one of the following:
capability information of the first communication device;
positioning assistance information of the first communication device;
response information of the first communication device;
positioning information updating information of the first communication device;
location measurement information; and
positioning result information.

Optionally, the first sending module is configured to:
send second information, where the second information carries the first target beam information and/or an angular positioning measurement result.

The angular positioning measurement result includes at least one of the following:
positioning reference signal identification information corresponding to angular positioning measurement;
energy information;
time measurement information;
K-factor information;
timestamp information;
a fifth list, where the fifth list is a correspondence between energy information and transmit-receive beam pairs; and
one or more pieces of additional angle measurement information.

The additional angle measurement information includes at least one of the following:
angle information corresponding to an additional path;
energy information corresponding to the additional path;
time measurement information corresponding to the additional path;
K-factor information corresponding to the additional path;
timestamp information corresponding to the additional path;
receive beam identification information corresponding to the additional path; and
receive antenna information corresponding to the additional path.

The first target beam information includes at least one of the following:
receive beam identification information corresponding to a beam for receiving the first positioning reference signal; and
receive antenna information of the first communication device.

Optionally, the second information includes at least one of the following:
second information of a second positioning reference signal, where one or more transmit beams adjacent to a third transmit beam are used to transmit the second positioning reference signal, and the third transmit beam is a transmit beam corresponding to a receive beam corresponding to the receive beam identification information; and
second information of a third positioning reference signal, where one or more transmit beams corresponding to a same receive beam are used to transmit the third positioning reference signal.

Optionally, the apparatus further includes:
a second processing unit, configured to receive capability request information of the first communication device sent by a third communication device, and/or send the capability information of the first communication device to the third communication device.

The capability request information of the first communication device or the capability information of the first communication device includes at least one of the following:
supporting multi-panel receive beam or not supporting multi-panel receive beam;
supporting multi-panel receive beam reporting or not supporting multi-panel receive beam reporting;
supporting receive beam identification information based on panel division or not supporting receive beam identification information based on panel division;
supporting receive beam identification information based on division of the first communication device or not supporting receive beam identification information based on division of the first communication device;
supporting reporting of panel information or not supporting reporting of panel information;
supporting reporting of intra-panel antenna information or not supporting reporting of intra-panel antenna information;
supporting reporting of angle information of the first communication device or not supporting reporting of angle information of the first communication device;
supporting reporting of antenna virtualization information or not supporting reporting of antenna virtualization information;
supporting reporting of calibration information or not supporting reporting of calibration information;
supporting calibration of Rx-Tx timing error between panels or not supporting calibration of Rx-Tx timing error between panels;
supporting angle measurement for multi-TXRU or not supporting angle measurement for multi-TXRU;
supporting LOS/NLOS identification or not supporting LOS/NLOS identification;
supporting reporting of additional angle information or not supporting reporting of additional angle information; and
supporting reporting of angle information and corresponding time and/or capability information or not supporting reporting of angle information and corresponding time and/or capability information.

Optionally, the apparatus further includes:
a first receiving unit, configured to receive third information; where the third information includes at least one of the following:
location information of the first communication device;
location information of the second communication device;
second target beam information; and
second beam information; where
the second target beam information includes at least one of the following:
   transmit beam identification information corresponding to a beam for sending the first positioning reference signal;
   transmit beam pattern information or response information corresponding to the beam for sending the first positioning reference signal;
   transmit beam direction information corresponding to the beam for sending the first positioning reference signal;
   transmit beam width information corresponding to the beam for sending the first positioning reference signal; and
   transmit antenna information of the second communication device; where
   the second beam information includes at least one of the following:
      transmit beam identification information;
      transmit beam pattern information or response information;
      transmit beam direction information;
      transmit beam width information; and
      transmit antenna information of the second communication device.

Optionally, the apparatus further includes:
a third processing unit, configured to: based on at least one of the third information, the first beam information, and the first target beam information, determine whether LOS/NLOS identification information is present in a beam measurement result, or determine a precise location information of the terminal.

Optionally, the apparatus further includes:
a second sending unit, configured to send the LOS/NLOS identification information.

Optionally, the apparatus further includes:
a second receiving unit, configured to receive fourth information, where the fourth information is used to indicate receive beam information of the first communication device.

The fourth information includes at least one of the following:
positioning reference signal identification information;
receive beam identification information of the first communication device;
receive antenna information of the first communication device;
panel or TXRU indication information; and
an error calibration result between panels.

Optionally, the apparatus further includes:
a first determining unit, configured to determine a receive beam based on the fourth information, or determining a receive beam by the first communication device itself.

Optionally, the apparatus further includes:
a third receiving unit, configured to receive fifth information, where the fifth information is direction information of the first communication device or direction information of a beam of the first communication device.

In this embodiment of this application, the positioning apparatus receives the first positioning reference signal and determines the first target beam information; and/or, determine location information and send the location information and first beam information. The first target beam information is information related to a beam for receiving the positioning reference signal. The first beam information includes at least one of receive beam identification information, receive beam pattern information or response information, receive beam direction information, receive beam width information, and receive antenna information of the first communication device. Using such information helps more accurately obtain angle of arrival information to improve positioning accuracy.

The positioning apparatus in this embodiment of this application may be an apparatus or electric device having an operating system, or may be a component, an integrated circuit, or a chip in the electric device. The electric device may be a mobile electronic device or a non-mobile electronic device. For example, the mobile electric device may include but is not limited to the types of the terminal 11 listed above, and the non-mobile electric device may be a server, a network attached storage (Network Attached Storage, NAS), a personal computer (personal computer, PC), a television (television, TV), a teller machine, a self-service machine, or the like, which is not specifically limited in this embodiment of this application.

The positioning apparatus provided in this embodiment of this application is capable of implementing the processes implemented in the method embodiments in FIG. 2 to FIG. 4, with the same technical effects achieved. To avoid repetition, details are not described herein again.

FIG. 8 is a second schematic structural diagram of a positioning apparatus according to an embodiment of this application. As shown in FIG. 8, the apparatus includes:
a third sending unit 810, configured to send a first positioning reference signal and/or second target beam information.

The first positioning reference signal is used for determining location information and/or first target beam information by a first communication device.

The second target beam information is information about a beam for sending the first positioning reference signal, and the second target beam information includes at least one of the following:
transmit beam identification information corresponding to a beam for sending the first positioning reference signal;
transmit beam pattern information or response information corresponding to the beam for sending the first positioning reference signal;
transmit beam direction information corresponding to the beam for sending the first positioning reference signal;
transmit beam width information corresponding to the beam for sending the first positioning reference signal; and
transmit antenna information of a second communication device.

Optionally, the apparatus further includes:
a fourth sending unit configured to send the second beam information to the first communication device and/or a third communication device.

The second beam information includes at least one of the following:
transmit beam identification information;
transmit beam pattern information or response information;
transmit beam direction information;
transmit beam width information; and
transmit antenna information of the second communication device.

Optionally, the transmit beam identification information includes at least one of the following:
transmit beam identification information based on panel division; and
transmit beam identification information based on division of the second communication device.

Optionally, the transmit beam pattern information or response information includes:
energy response information of at least one transmit beam corresponding to the transmit beam identification information at various angles;
   or,
energy response information of a transmit beam corresponding to the transmit beam identification information and one or more adjacent beams at various angles;
   or,
energy response information of multiple or all transmit beams at various angles.

The energy response information of the beam at various angles is expressed in one of the following manners:
discrete Fourier transform DFT coefficient;
a third list, where the third list is a list of at least one angle and energy;
a third set, where the third set is a set of at least one angle and energy;
a fourth list, where the fourth list is an energy list obtained according to a preset rule and granularity; and
a fourth set, where the fourth set is a energy set obtained according to a preset rule and granularity.

Optionally, the transmit beam direction information includes at least one of the following:
azimuth information; and
vertical inclination information; where

The azimuth information is information about an included angle relative to a reference direction, and the reference direction is local direction information of the second communication device or a geographical north direction.

Optionally, the transmit beam width information includes at least one of the following:
angle width information of a transmit beam corresponding to the transmit beam identification information in a case that energy information of the transmit beam is greater than a ninth threshold;
angle width information of the transmit beam corresponding to the transmit beam identification information in a case that the energy information of the transmit beam is greater than a percent I of a maximum energy of the transmit beam;
angle width information of the transmit beam corresponding to the transmit beam identification information in a case that the energy information of the transmit beam is equal to energy information of an adjacent beam;
angle width information of a transmit beam corresponding to the transmit beam identification information in a case that main lobe energy information of the transmit beam is greater than a tenth threshold;
angle width information of the transmit beam corresponding to the transmit beam identification information in a case that the main lobe energy information of the transmit beam is greater than a percent J of a maximum main lobe energy of the transmit beam; and
angle width information of the transmit beam corresponding to the transmit beam identification information in a case that the main lobe energy information of the transmit beam is equal to main lobe energy information of an adjacent beam;
   or,
the transmit beam width information includes at least one of the following:
   angle width information of a transmit beam corresponding to the transmit beam identification information in a case that energy information of the transmit beam is greater than an eleventh threshold, and angle width information of an adjacent beam in a case that energy information of the adjacent beam is greater than a twelfth threshold;
   angle width information of the transmit beam corresponding to the transmit beam identification information in a case that the energy information of the transmit beam is greater than a percent K of a maximum energy of the transmit beam, and angle width information of the adjacent beam in a case that the energy information of the adjacent beam is greater than a percent L of a maximum energy of the adjacent beam;
   angle width information of the transmit beam corresponding to the transmit beam identification information in a case that the energy information of the transmit beam is equal to the energy information of the adjacent beam, and angle width information of the adjacent beam in a case that the energy information of the adjacent beam is equal to the energy information of the transmit beam corresponding to the transmit beam identification information;
   angle width information of a transmit beam corresponding to the transmit beam identification information in a case that main lobe energy information of the transmit beam is greater than a thirteenth threshold, and angle width information of the adjacent beam in a case that main lobe energy information of the adjacent beam is greater than a fourteenth threshold;
   angle width information of the transmit beam corresponding to the transmit beam identification information in a case that the main lobe energy information of the transmit beam is greater than a percent M of a maximum main lobe energy of the transmit beam corresponding to the transmit beam identification information, and angle width information of the adjacent beam in a case that the main lobe energy information of the adjacent beam is greater than a percent N of a maximum main lobe energy of the adjacent beam; and
   angle width information of the transmit beam corresponding to the transmit beam identification information in a case that the main lobe energy information of the transmit beam is equal to the main lobe energy information of the adjacent beam, and angle width information of the adjacent beam in a case that the main lobe energy information of the adjacent beam is equal to the main lobe energy information of the transmit beam corresponding to the transmit beam identification information;
      or,
   the transmit beam width information includes at least one of the following:
      angle width information of multiple or all transmit beams in a case that energy information of the multiple or all transmit beams is greater than a fifteenth threshold;
      angle width information of the multiple or all transmit beams in a case that the energy information of the multiple or all transmit beams is greater than a percent O of maximum energies of the multiple or all transmit beams;
      angle width information of the multiple or all transmit beams in a case that the energy information of the multiple or all transmit beams is equal to energy information of an adjacent beam;
      angle width information of the multiple or all transmit beams in a case that main lobe energy information of the multiple or all transmit beams is greater than a sixteenth threshold;
      angle width information of the multiple or all transmit beams in a case that the main lobe energy information of the multiple or all transmit beams is greater than a percent P of maximum main lobe energies of the multiple or all transmit beams; and
      angle width information of the multiple or all transmit beams in a case that the main lobe energy information of the multiple or all transmit beams is equal to main lobe energy information of the adjacent beam; where
      I, J, K, L, M, N, O, and P are all natural numbers greater than 0 and less than 100.

Optionally, the transmit antenna information of the second communication device includes at least one of the following:
panel information;
intra-panel antenna information;
angle information of the second communication device;
antenna virtualization information; and
calibration information.

Optionally, the panel information includes at least one of the following: panel identification information; panel quantity information; and panel location information; where the panel location information includes at least one of the following: arrangement information of a plurality of panels; panel spacing; and a position of a panel relative to a local coordinate system or a global coordinate system of the second communication device.

Optionally, the intra-panel antenna information includes at least one of the following: antenna identification information; antenna quantity information; antenna location information; and antenna polarization information; where the antenna location information includes at least one of the following: arrangement information of a plurality of antennas, antenna spacing, antenna aperture, and antenna position within a panel.

Optionally, the angle information of the second communication device includes at least one of the following: angle information of a local coordinate system of the second communication device; and a conversion parameter between the local coordinate system of the second communication device and a global coordinate system.

Optionally, the antenna virtualization information includes at least one of the following: transmit and receive unit TXRU virtualization assumption; channel state information reference signal CSI-RS port mapping information; sounding reference signal SRS port mapping information; sounding reference signal for positioning SRS-pos port mapping information; and positioning reference signal PRS port mapping information.

Optionally, the calibration information includes at least one of the following: whether a receive-transmit time error Rx-Tx timing error has been calibrated for multiple panels; receive-transmit time error Rx-Tx timing error; whether a beam angle deviation has been calibrated; and beam angle deviation.

Optionally, the sending the second target beam information and/or the second beam information includes: sending seventh information, where the seventh information carries the second target beam information and/or second beam information; where the seventh information is one of the following: capability information of the second communication device; positioning assistance information of the second communication device;
response information of the second communication device; positioning information updating information of the second communication device; location measurement information; and
positioning result information.

Optionally, the apparatus further includes: a fourth processing unit configured to receive capability request information of the second communication device sent by a third communication device, and/or send the capability information of the second communication device to the third communication device; where the capability request information of the second communication device or the capability information of the second communication device includes at least one of the following: supporting multi-panel transmit beam or not supporting multi-panel transmit beam; supporting multi-panel transmit beam reporting or not supporting multi-panel transmit beam reporting; supporting transmit beam identification information based on panel division or not supporting transmit beam identification information based on panel division; supporting transmit beam identification information based on division of the second communication device or not supporting transmit beam identification information based on division of the second communication device; supporting reporting of panel information or not supporting reporting of panel information; supporting reporting of intra-panel antenna information or not supporting reporting of intra-panel antenna information; supporting reporting of angle information of the second communication device or not supporting reporting of angle information of the second communication device; supporting reporting of antenna virtualization information or not supporting reporting of antenna virtualization information;
supporting reporting of calibration information or not supporting reporting of calibration information; supporting calibration of Rx-Tx timing error between panels or not supporting calibration of Rx-Tx timing error between panels; supporting angle measurement for multi-TXRU or not supporting angle measurement for multi-TXRU; supporting LOS/NLOS identification or not supporting LOS/NLOS identification; supporting reporting of additional angle information or not supporting reporting of additional angle information; and supporting reporting of angle information and corresponding time and/or capability information or not supporting reporting of angle information and corresponding time and/or capability information.

Optionally, the apparatus further includes: a fourth sending unit configured to send an angular positioning measurement result; where the angular positioning measurement result includes at least one of the following: positioning reference signal identification information corresponding to angular positioning measurement; energy information; time measurement information; K-factor information; timestamp information; a sixth list, where the sixth list is a correspondence between energy information and transmit-receive beam pairs; and one or more pieces of additional angle measurement information. The additional angle measurement information includes at least one of the following:
angle information corresponding to an additional path;
energy information corresponding to the additional path;
time measurement information corresponding to the additional path;
K-factor information corresponding to the additional path;
timestamp information corresponding to the additional path;
receive beam identification information corresponding to the additional path; and
receive antenna information corresponding to the additional path.

Optionally, the apparatus further includes: a fourth receiving unit configured to receive first target beam information and/or receiving first beam information; where the first target beam information includes at least one of the following: receive beam identification information corresponding to a beam for receiving the first positioning reference signal; receive beam pattern information or response information corresponding to the beam for receiving the first positioning reference signal; receive beam direction information corresponding to the beam for receiving the first positioning reference signal; receive beam width information corresponding to the beam for receiving the first positioning reference signal; and receive antenna information of the first communication device. The first beam information includes at least one of the following: receive beam identification information; receive beam pattern information or response information; receive beam direction information; receive beam width information; and receive antenna information of the first communication device.

Optionally, the apparatus further includes: a second determining unit configured to: based on the first target beam information and/or the first beam information, and the second target beam information and/or the second beam information, determine whether LOS/NLOS identification information is present in a beam measurement result.

Optionally, the apparatus further includes: a fifth sending unit configured to: if the LOS/NLOS identification information is present in the beam measurement result, send the LOS/NLOS identification information to the first communication device and/or a third communication device.

Optionally, the apparatus further includes: a fifth receiving unit configured to: receive sixth information, where the sixth information is used to indicate transmit beam information of the second communication device; and the sixth information includes at least one of the following: positioning reference signal identification information; transmit beam identification information of the second communication device; transmit antenna information of the second communication device;
panel or TXRU indication information; and an error calibration result between panels.

Optionally, the apparatus further includes: a third determining unit configured to: determine a transmit beam based on the sixth information, or determine a transmit beam for the second communication device itself.

In this embodiment of this application, the positioning apparatus sends the first positioning reference signal and/or the second target beam information, where the second target beam information includes at least one of the transmit beam identification information, transmit beam pattern information or response information, transmit beam direction information, transmit beam width information, and transmit antenna information of the second communication device. Using such information helps the first communication device or the third communication device to perform LOS/NLOS identification and/or location calculation, thereby improving positioning accuracy.

The positioning apparatus in this embodiment of this application may be an apparatus or an electric device having an operating system, or may be a component, an integrated circuit, or a chip in an electronic device. The electric device may be a mobile electric device or a non-mobile electric device. For example, the mobile electric device may include but is not limited to the types of the terminal 11 listed above, and the non-mobile electric device may be a server, a network attached storage (Network Attached Storage, NAS), a personal computer (personal computer, PC), a television (television, TV), a teller machine, a self-service machine, or the like, which is not specifically limited in this embodiment of this application.

The positioning apparatus provided in this embodiment of this application is capable of implementing the processes implemented in the method embodiment shown in FIG. 5, with the same technical effects achieved. To avoid repetition, details are not described herein again.

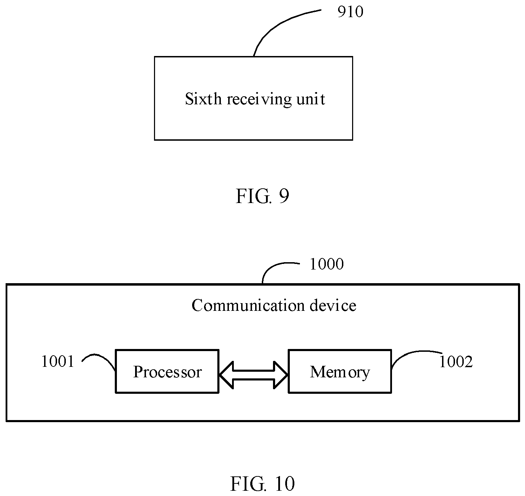

FIG. 9 is a third schematic structural flowchart of a positioning apparatus according to an embodiment of this application. As shown in FIG. 9, the apparatus includes: a sixth receiving unit 910 configured to receive at least one of the following: first target beam information of a first communication device; second target beam information of a second communication device; and location information and first beam information of the first communication device; where the first target beam information includes at least one of the following: receive beam identification information corresponding to a beam for receiving the first positioning reference signal;receive beam pattern information or response information corresponding to the beam for receiving the first positioning reference signal; receive beam direction information corresponding to the beam for receiving the first positioning reference signal; receive beam width information corresponding to the beam for receiving the first positioning reference signal; and receive antenna information of the first communication device. The first beam information includes at least one of the following: receive beam identification information; receive beam pattern information or response information; receive beam direction information; receive beam width information; and receive antenna information of the first communication device. The second target beam information includes at least one of the following: transmit beam identification information corresponding to a beam for sending the first positioning reference signal; transmit beam pattern information or response information corresponding to the beam for sending the first positioning reference signal; transmit beam direction information corresponding to the beam for sending the first positioning reference signal; transmit beam width information corresponding to the beam for sending the first positioning reference signal; and transmit antenna information of the second communication device.

Optionally, the apparatus further includes: a seventh receiving unit configured to receive second beam information of the second communication device; where the second beam information includes: transmit beam identification information; transmit beam pattern information or response information; transmit beam direction information; transmit beam width information; and transmit antenna information of the second communication device.

Optionally, the apparatus further includes: a judgment unit configured to: based on the first beam information and/or the first target beam information, and the second beam information and/or the second target beam information, determine whether LOS/NLOS identification information is present in a beam measurement result.

Optionally, the apparatus further includes: a sixth sending unit configured to: if the LOS/NLOS identification information is present, send the LOS/NLOS identification information to the first communication device and/or the second communication device.

Optionally, the apparatus further includes: a seventh sending unit configured to: send third information to the first communication device; where the third information includes at least one of the following: location information of the first communication device; location information of the second communication device; second target beam information; and second beam information.

Optionally, the apparatus further includes: an eighth sending unit configured to: send fourth information to the first communication device, where the fourth information is used to indicate receive beam information of the first communication device; where the fourth information includes at least one of the following: positioning reference signal identification information; receive beam identification information of the first communication device; receive antenna information of the first communication device; where panel or transmit and receive unit TXRU indication information; and an error calibration result between panels

Optionally, the apparatus further includes: a ninth sending unit configured to: send fifth information to the first communication device, where the fifth information is direction information of the first communication device or direction information of a beam of the first communication device.

Optionally, the apparatus further includes: a tenth sending unit configured to: send sixth information to the second communication device, where the sixth information is used to indicate transmit beam information of the second communication device.

The sixth information includes at least one of the following:
positioning reference signal identification information;
transmit beam identification information of the second communication device;
transmit antenna information of the second communication device;
panel or TXRU indication information; and
an error calibration result between panels.

In this embodiment of this application, the positioning apparatus receives at least one of the first target beam information of the first communication device, the second target beam information of the second communication device, the location information of the first communication device, and the first beam information. Using such information helps the third communication device to accurately perform positioning solution, thereby improving positioning accuracy.

The positioning apparatus in this embodiment of this application may be an apparatus or an electric device having an operating system, or may be a component, an integrated circuit, or a chip in an electronic device. The electric device may be a mobile electric device or a non-mobile electric device. For example, the mobile electric device may include but is not limited to the types of the terminal 11 listed above, and the non-mobile electric device may be a server, a network attached storage (Network Attached Storage, NAS), a personal computer (personal computer, PC), a television (television, TV), a teller machine, a self-service machine, or the like, which is not specifically limited in this embodiment of this application.

The positioning apparatus provided in this embodiment of this application is capable of implementing the processes implemented in the method embodiment shown in FIG. 6, with the same technical effects achieved. To avoid repetition, details are not described herein again.

Optionally, as shown in FIG. 10, an embodiment of this application further provides a communication device 1000, including a processor 1001, a memory 1002, and a program or instructions stored in the memory 1002 and capable of running on the processor 1001. For example, when the communication device 1000 is a terminal and when the program or the instructions are executed by the processor 1001, the processes of the foregoing embodiments of the positioning method are implemented, with the same technical effects achieved. When the communication device 1000 is a network-side device and when the program or the instructions are executed by the processor 1001, the processes of the foregoing positioning method embodiments are implemented, with the same technical effects achieved. To avoid repetition, details are not described herein again.

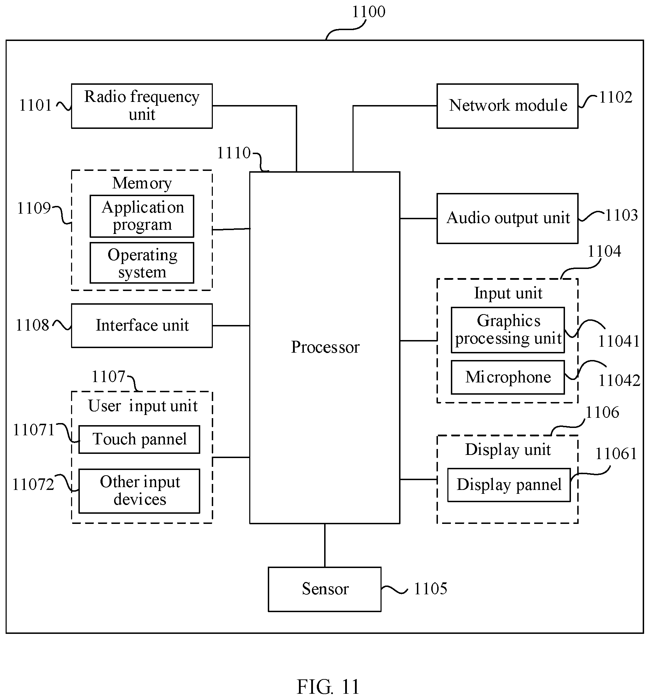

FIG. 11 is a schematic diagram of a hardware structure of a terminal for implementing the embodiments of this application.

The terminal 1100 includes but is not limited to at least part of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

Persons skilled in the art can understand that the terminal 1100 may further include a power supply (for example, a battery) supplying power to the components, and the power supply may be logically connected to the processor 1110 through a power management system. In this way, functions such as charge management, discharge management, and power consumption management are implemented by using the power management system. The structure of the terminal shown in FIG. 11 does not constitute any limitation on the terminal. The terminal may include more or fewer components than shown in the figure, or a combination of some components, or the components disposed differently. Details are not described herein again.

It can be understood that in this embodiment of this application, the input unit 1104 may include a graphics processing unit (Graphics Processing Unit, GPU) 11041 and a microphone 11042. The graphics processing unit 11041 processes image data of a still picture or video obtained by an image capture apparatus (such as a camera) in a video capture mode or an image capture mode. The display unit 1106 may include a display panel 11061, and the display panel 11061 may be configured in a form of a liquid crystal display, an organic light-emitting diode, and the like. The user input unit 1107 may include a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (such as a volume control key or a power on/off key), a trackball, a mouse, a joystick, and the like. Details are not described herein.

In this embodiment of this application, the radio frequency unit 1101 receives downlink data from a network-side device, and then sends the downlink data to the processor 1110 for processing; and also sends uplink data to the network-side device. Generally, the radio frequency unit 1101 includes but is not limited to an antenna, at least one amplifier, a transceiver, a coupler, a low noise amplifier, a duplexer, and the like.

The memory 1109 may be configured to store software programs or instructions and various data. The memory 1109 may include a program or instruction storage area and a data storage area. The program or instruction storage area may store an operating system, an application program or instruction required by at least one function (for example, a sound playback function or an image playback function), and the like. In addition, the memory 1109 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 1110 may include one or more processing units. Optionally, an application processor and a modem processor may be integrated in the processor 1110. The application processor primarily processes an operating system, user interfaces, application programs or instructions, and the like. The modem processor primarily processes radio communication, for example, being a baseband processor. It can be understood that the modem processor may alternatively be not integrated in the processor 1110.

The processor 1110 is configured to receive a first positioning reference signal and determine first target beam information; and/or, determine location information based on the first positioning reference signal and send the location information and first beam information.

The first target beam information is information about a beam receiving the first positioning reference signal, and the first target beam information includes at least one of the following:
receive beam identification information corresponding to a beam for receiving the first positioning reference signal;
receive beam pattern information or response information corresponding to the beam for receiving the first positioning reference signal;
receive beam direction information corresponding to the beam for receiving the first positioning reference signal;
receive beam width information corresponding to the beam for receiving the first positioning reference signal; and
receive antenna information of the first communication device.

The first beam information includes at least one of the following:
receive beam identification information;
receive beam pattern information or response information;
receive beam direction information;
receive beam width information; and
receive antenna information of the first communication device.

In this embodiment of this application, the terminal receives the first positioning reference signal and determines the first target beam information; and/or, determine location information and send the location information and first beam information. The first target beam information is information related to a beam for receiving the positioning reference signal. The first beam information includes at least one of receive beam identification information, receive beam pattern information or response information, receive beam direction information, receive beam width information, and receive antenna information of the terminal. Using such information helps more accurately obtain angle of arrival information to improve positioning accuracy.

Optionally, the radio frequency unit 1101 is configured to send the first target beam information for one or more times, where the first target beam information is used for determining location information of a terminal and/or line-of-sight LOS/non-line-of-sight NLOS identification information by a network-side device.

Optionally, the receive beam identification information includes at least one of the following:
receive beam identification information based on panel division; and
receive beam identification information based on division of the first communication device.

Optionally, the receive beam pattern information or response information includes: energy response information of at least one receive beam corresponding to the receive beam identification information at various angles; or, energy response information of a receive beam corresponding to the receive beam identification information and one or more adjacent beams at various angles; or, energy response information of multiple or all receive beams at various angles.

The energy response information of the beam at various angles is expressed in one of the following manners:
discrete Fourier transform DFT coefficient;
a first list, where the first list is a list of at least one angle and energy;
a first set, where the first set is a set of at least one angle and energy;
a second list, where the second list is an energy list obtained according to a preset rule and granularity; and
a second set, where the second set is an energy set obtained according to a preset rule and granularity.

Optionally, the receive beam direction information includes at least one of the following: azimuth information; and vertical inclination information; where the azimuth information is information about an included angle relative to a reference direction, and the reference direction is local direction information of the first communication device or a geographical north direction.

Optionally, the receive beam width information includes at least one of the following:
angle width information of a receive beam corresponding to the receive beam identification information in a case that energy information of the receive beam is greater than a first threshold;
angle width information of the receive beam corresponding to the receive beam identification information in a case that the energy information of the receive beam is greater than a percent A of a maximum energy of the receive beam;
angle width information of the receive beam corresponding to the receive beam identification information in a case that the energy information of the receive beam is equal to energy information of an adjacent beam;
angle width information of the receive beam corresponding to the receive beam identification information in a case that main lobe energy information of the receive beam is greater than a second threshold;
angle width information of the receive beam corresponding to the receive beam identification information in a case that the main lobe energy information of the receive beam is greater than a percent B of a maximum main lobe energy of the receive beam; and
angle width information of the receive beam corresponding to the receive beam identification information in a case that the main lobe energy information of the receive beam is equal to main lobe energy information of the adjacent beam;
   or,
the receive beam width information includes at least one of the following:
   angle width information of a receive beam corresponding to the receive beam identification information in a case that energy information of the receive beam is greater than a third threshold, and angle width information of an adjacent beam in a case that energy information of the adjacent beam is greater than a fourth threshold;
   angle width information of the receive beam corresponding to the receive beam identification information in a case that the energy information of the receive beam is greater than a percent C of a maximum energy of the receive beam, and angle width information of the adjacent beam in a case that the energy information of the adjacent beam is greater than a percent D of a maximum energy of the adjacent beam;
   angle width information of the receive beam corresponding to the receive beam identification information in a case that the energy information of the receive beam is equal to the energy information of the adjacent beam, and angle width information of the adjacent beam in a case that the energy information of the adjacent beam is equal to the energy information of the receive beam corresponding to the receive beam identification information;
   angle width information of the receive beam corresponding to the receive beam identification information in a case that main lobe energy information of the receive beam is greater than a fifth threshold, and angle width information of the adjacent beam in a case that main lobe energy information of the adjacent beam is greater than a sixth threshold;
   angle width information of the receive beam corresponding to the receive beam identification information in a case that the main lobe energy information of the receive beam is greater than a percent E of a maximum main lobe energy of the receive beam, and angle width information of the adjacent beam in a case that main lobe energy information of the adjacent beam is greater than a percent F of a maximum main lobe energy of the adjacent beam; and
   angle width information of the receive beam corresponding to the receive beam identification information in a case that the main lobe energy information of the receive beam is equal to the main lobe energy information of the adjacent beam, and angle width information of the adjacent beam in a case that the main lobe energy information of the adjacent beam is equal to the main lobe energy information of the receive beam corresponding to the receive beam identification information;
      or,
   the receive beam width information includes at least one of the following:
      angle width information of multiple or all receive beams in a case that energy information of the multiple or all receive beams is greater than a seventh threshold;
      angle width information of the multiple or all receive beams in a case that the energy information of the multiple or all receive beams is greater than a percent G of maximum energies of the multiple or all receive beams;
      angle width information of the multiple or all receive beams in a case that the energy information of the multiple or all receive beams is equal to energy information of an adjacent beam;
      angle width information of the multiple or all receive beams in a case that main lobe energy information of the multiple or all receive beams is greater than an eighth threshold;
      angle width information of the multiple or all receive beams in a case that the main lobe energy information of the multiple or all receive beams is greater than a percent H of maximum main lobe energies of the multiple or all receive beams; and
      angle width information of the multiple or all receive beams in a case that the main lobe energy information of the multiple or all receive beams is equal to main lobe energy information of the adjacent beam; where
      A, B, C, D, E, F, G, and H are all natural numbers greater than 0 and less than 100.

Optionally, the receive antenna information of the first communication device includes at least one of the following: panel information; intra-panel antenna information; angle information of the first communication device; antenna virtualization information; and calibration information.

Optionally, the panel information includes at least one of the following: panel identification information; panel quantity information; and panel location information; where the panel location information includes at least one of the following: arrangement information of a plurality of panels; panel spacing; and a position of a panel relative to a local coordinate system or a global coordinate system of the first communication device.

Optionally, the intra-panel antenna information includes at least one of the following: antenna identification information; antenna quantity information; antenna location information; and antenna polarization information; where the antenna location information includes at least one of the following: arrangement information of a plurality of antennas, antenna spacing, antenna aperture, and antenna position within a panel.

Optionally, the angle information of the first communication device includes at least one of the following:
angle information of a local coordinate system of the first communication device; and
a conversion parameter between the local coordinate system of the first communication device and a global coordinate system.

Optionally, the antenna virtualization information includes at least one of the following:
transmit and receive unit TXRU virtualization assumption;
channel state information reference signal CSI-RS port mapping information;
sounding reference signal SRS port mapping information;
sounding reference signal for positioning SRS-pos port mapping information; and
positioning reference signal PRS port mapping information.

Optionally, the calibration information includes at least one of the following:
whether a receive-transmit time error Rx-Tx timing error has been calibrated for multiple panels;
receive-transmit time error Rx-Tx timing error;
whether a beam angle deviation has been calibrated; and
beam angle deviation.

Optionally, the sending the first target beam information and/or the first beam information includes:
sending first information, where the first information carries the first target beam information and/or first beam information.

The first information is one of the following: capability information of the first communication device; positioning assistance information of the first communication device; response information of the first communication device; positioning information updating information of the first communication device; location measurement information; and positioning result information.

Optionally, the radio frequency unit 1101 is configured to: send second information, where the second information carries the first target beam information and/or an angular positioning measurement result; where the angular positioning measurement result includes at least one of the following: positioning reference signal identification information corresponding to angular positioning measurement; energy information; time measurement information; K-factor information; timestamp information; a fifth list, where the fifth list is a correspondence between energy information and transmit-receive beam pairs; and one or more pieces of additional angle measurement information.

The additional angle measurement information includes at least one of the following:
angle information corresponding to an additional path;
energy information corresponding to the additional path;
time measurement information corresponding to the additional path;
K-factor information corresponding to the additional path;
timestamp information corresponding to the additional path;
receive beam identification information corresponding to the additional path; and
receive antenna information corresponding to the additional path.

The first target beam information includes at least one of the following:
receive beam identification information corresponding to a beam for receiving the first positioning reference signal; and
receive antenna information of the first communication device.

Optionally, the second information includes at least one of the following:
second information of a second positioning reference signal, where one or more transmit beams adjacent to a third transmit beam are used to transmit the second positioning reference signal, and the third transmit beam is a transmit beam corresponding to a receive beam corresponding to the receive beam identification information; and
second information of a third positioning reference signal, where one or more transmit beams corresponding to a same receive beam are used to transmit the third positioning reference signal.

Optionally, the processor 1110 is configured to receive capability request information of the first communication device sent by a third communication device, and/or send the capability information of the first communication device to the third communication device.

The capability request information of the first communication device or the capability information of the first communication device includes at least one of the following:
supporting multi-panel receive beam or not supporting multi-panel receive beam;
supporting multi-panel receive beam reporting or not supporting multi-panel receive beam reporting;
supporting receive beam identification information based on panel division or not supporting receive beam identification information based on panel division;
supporting receive beam identification information based on division of the first communication device or not supporting receive beam identification information based on division of the first communication device;
supporting reporting of panel information or not supporting reporting of panel information;
supporting reporting of intra-panel antenna information or not supporting reporting of intra-panel antenna information;
supporting reporting of angle information of the first communication device or not supporting reporting of angle information of the first communication device;
supporting reporting of antenna virtualization information or not supporting reporting of antenna virtualization information;
supporting reporting of calibration information or not supporting reporting of calibration information;
supporting calibration of Rx-Tx timing error between panels or not supporting calibration of Rx-Tx timing error between panels;
supporting angle measurement for multi-TXRU or not supporting angle measurement for multi-TXRU;
supporting LOS/NLOS identification or not supporting LOS/NLOS identification;
supporting reporting of additional angle information or not supporting reporting of additional angle information; and
supporting reporting of angle information and corresponding time and/or capability information or not supporting reporting of angle information and corresponding time and/or capability information.

Optionally, the radio frequency unit 1101 is further configured to receive third information.

The third information includes at least one of the following: location information of the first communication device; location information of the second communication device; second target beam information; and second beam information.

The second target beam information includes at least one of the following:
transmit beam identification information corresponding to a beam for sending the first positioning reference signal;
transmit beam pattern information or response information corresponding to the beam for sending the first positioning reference signal;
transmit beam direction information corresponding to the beam for sending the first positioning reference signal;
transmit beam width information corresponding to the beam for sending the first positioning reference signal; and
transmit antenna information of the second communication device.

The second beam information includes at least one of the following:
transmit beam identification information;
transmit beam pattern information or response information;
transmit beam direction information;
transmit beam width information; and
transmit antenna information of the second communication device.

Optionally, the processor 1110 is further configured to: based on at least one of the third information, the first beam information, and the first target beam information, determine whether LOS/NLOS identification information is present in a beam measurement result, or determine a precise location information of the terminal.

Optionally, the radio frequency unit 1101 is further configured to send the LOS/NLOS identification information.

Optionally, the radio frequency unit 1101 is further configured to receive fourth information, where the fourth information is used to indicate receive beam information of the first communication device.

The fourth information includes at least one of the following: positioning reference signal identification information; receive beam identification information of the first communication device; receive antenna information of the first communication device; panel or TXRU indication information; and an error calibration result between panels.

Optionally, the processor 1110 is further configured to: determine a receive beam based on the fourth information, or determine a receive beam for the first communication device itself.

Optionally, the radio frequency unit 1101 is further configured to receive fifth information, where the fifth information is direction information of the first communication device or direction information of a beam of the first communication device.

It should be noted that the first communication device is a terminal, and the terminal embodiment in the embodiments of this application is a product embodiment corresponding to the foregoing method embodiment, and all the implementations in the foregoing method embodiment are applicable to this terminal embodiment, with the same or similar technical effects achieved. Therefore, details are not repeated herein.

In some optional embodiments, the radio frequency unit 1101 is configured to send a first positioning reference signal and/or second target beam information, where the first positioning reference signal is used for determining location information and/or first target beam information by a first communication device.

The second target beam information is information about a beam for sending the first positioning reference signal, and the second target beam information includes at least one of the following:
transmit beam identification information corresponding to the beam for sending the first positioning reference signal;
transmit beam pattern information or response information corresponding to the beam for sending the first positioning reference signal;
transmit beam direction information corresponding to the beam for sending the first positioning reference signal;
transmit beam width information corresponding to the beam for sending the first positioning reference signal; and
transmit antenna information of the second communication device.

In this embodiment of this application, the terminal sends the first positioning reference signal and/or the second target beam information, where the second target beam information includes at least one of the transmit beam identification information, transmit beam pattern information or response information, transmit beam direction information, transmit beam width information, and transmit antenna information of the terminal. Using such information helps the first communication device or the third communication device to perform LOS/NLOS identification and/or location calculation, thereby improving positioning accuracy.

Optionally, the radio frequency unit 1101 is further configured to send second beam information to the first communication device and/or a third communication device. The second beam information includes at least one of the following: transmit beam identification information; transmit beam pattern information or response information; transmit beam direction information; transmit beam width information; and transmit antenna information of the second communication device.

Optionally, the transmit beam identification information includes at least one of the following:
transmit beam identification information based on panel division; and
transmit beam identification information based on division of the second communication device.

Optionally, the transmit beam pattern information or response information includes:
energy response information of at least one transmit beam corresponding to the transmit beam identification information at various angles;
   or,
energy response information of a transmit beam corresponding to the transmit beam identification information and one or more adjacent beams at various angles;
   or,
energy response information of multiple or all transmit beams at various angles.

The energy response information of the beam at various angles is expressed in one of the following manners:
discrete Fourier transform DFT coefficient;
a third list, where the third list is a list of at least one angle and energy;
a third set, where the third set is a set of at least one angle and energy;
a fourth list, where the fourth list is an energy list obtained according to a preset rule and granularity; and
a fourth set, where the fourth set is a energy set obtained according to a preset rule and granularity.

Optionally, the transmit beam direction information includes at least one of the following: azimuth information; and vertical inclination information.

The azimuth information is information about an included angle relative to a reference direction, and the reference direction is local direction information of the second communication device or a geographical north direction.

Optionally, the transmit beam width information includes at least one of the following:
angle width information of a transmit beam corresponding to the transmit beam identification information in a case that energy information of the transmit beam is greater than a ninth threshold;
angle width information of the transmit beam corresponding to the transmit beam identification information in a case that the energy information of the transmit beam is greater than a percent I of a maximum energy of the transmit beam;
angle width information of the transmit beam corresponding to the transmit beam identification information in a case that the energy information of the transmit beam is equal to energy information of an adjacent beam;
angle width information of a transmit beam corresponding to the transmit beam identification information in a case that main lobe energy information of the transmit beam is greater than a tenth threshold;
angle width information of the transmit beam corresponding to the transmit beam identification information in a case that the main lobe energy information of the transmit beam is greater than a percent J of a maximum main lobe energy of the transmit beam; and
angle width information of the transmit beam corresponding to the transmit beam identification information in a case that the main lobe energy information of the transmit beam is equal to main lobe energy information of an adjacent beam;
   or,
the transmit beam width information includes at least one of the following:
   angle width information of a transmit beam corresponding to the transmit beam identification information in a case that energy information of the transmit beam is greater than an eleventh threshold, and angle width information of an adjacent beam in a case that energy information of the adjacent beam is greater than a twelfth threshold;
   angle width information of the transmit beam corresponding to the transmit beam identification information in a case that the energy information of the transmit beam is greater than a percent K of a maximum energy of the transmit beam, and angle width information of the adjacent beam in a case that the energy information of the adjacent beam is greater than a percent L of a maximum energy of the adjacent beam;
   angle width information of the transmit beam corresponding to the transmit beam identification information in a case that the energy information of the transmit beam is equal to the energy information of the adjacent beam, and angle width information of the adjacent beam in a case that the energy information of the adjacent beam is equal to the energy information of the transmit beam corresponding to the transmit beam identification information;
   angle width information of a transmit beam corresponding to the transmit beam identification information in a case that main lobe energy information of the transmit beam is greater than a thirteenth threshold, and angle width information of the adjacent beam in a case that main lobe energy information of the adjacent beam is greater than a fourteenth threshold;
   angle width information of the transmit beam corresponding to the transmit beam identification information in a case that the main lobe energy information of the transmit beam is greater than a percent M of a maximum main lobe energy of the transmit beam corresponding to the transmit beam identification information, and angle width information of the adjacent beam in a case that the main lobe energy information of the adjacent beam is greater than a percent N of a maximum main lobe energy of the adjacent beam; and
   angle width information of the transmit beam corresponding to the transmit beam identification information in a case that the main lobe energy information of the transmit beam is equal to the main lobe energy information of the adjacent beam, and angle width information of the adjacent beam in a case that the main lobe energy information of the adjacent beam is equal to the main lobe energy information of the transmit beam corresponding to the transmit beam identification information;
      or,
   the transmit beam width information includes at least one of the following:
      angle width information of multiple or all transmit beams in a case that energy information of the multiple or all transmit beams is greater than a fifteenth threshold;
      angle width information of the multiple or all transmit beams in a case that the energy information of the multiple or all transmit beams is greater than a percent O of maximum energies of the multiple or all transmit beams;
      angle width information of the multiple or all transmit beams in a case that the energy information of the multiple or all transmit beams is equal to energy information of an adjacent beam;
      angle width information of the multiple or all transmit beams in a case that main lobe energy information of the multiple or all transmit beams is greater than a sixteenth threshold;
      angle width information of the multiple or all transmit beams in a case that the main lobe energy information of the multiple or all transmit beams is greater than a percent P of maximum main lobe energies of the multiple or all transmit beams; and
      angle width information of the multiple or all transmit beams in a case that the main lobe energy information of the multiple or all transmit beams is equal to main lobe energy information of the adjacent beam; where
      I, J, K, L, M, N, O, and P are all natural numbers greater than 0 and less than 100.

Optionally, the transmit antenna information of the second communication device includes at least one of the following: panel information; intra-panel antenna information; angle information of the second communication device; antenna virtualization information; and calibration information.

Optionally, the panel information includes at least one of the following: panel identification information; panel quantity information; and panel location information; where the panel location information includes at least one of the following: arrangement information of a plurality of panels; panel spacing; and a position of a panel relative to a local coordinate system or a global coordinate system of the second communication device.

Optionally, the intra-panel antenna information includes at least one of the following: antenna identification information; antenna quantity information; antenna location information; and antenna polarization information; where the antenna location information includes at least one of the following: arrangement information of a plurality of antennas, antenna spacing, antenna aperture, and antenna position within a panel.

Optionally, the angle information of the second communication device includes at least one of the following:
angle information of a local coordinate system of the second communication device; and
a conversion parameter between the local coordinate system of the second communication device and a global coordinate system.

Optionally, the antenna virtualization information includes at least one of the following:
transmit and receive unit TXRU virtualization assumption;
channel state information reference signal CSI-RS port mapping information;
sounding reference signal SRS port mapping information;
sounding reference signal for positioning SRS-pos port mapping information; and
positioning reference signal PRS port mapping information.

Optionally, the calibration information includes at least one of the following:
whether a receive-transmit time error Rx-Tx timing error has been calibrated for multiple panels;
receive-transmit time error Rx-Tx timing error;
whether a beam angle deviation has been calibrated; and
beam angle deviation.

Optionally, the sending the second target beam information and/or the second beam information includes:
sending seventh information, where the seventh information carries the second target beam information and/or second beam information.

The seventh information is one of the following: capability information of the second communication device; positioning assistance information of the second communication device; response information of the second communication device; positioning information updating information of the second communication device; location measurement information; and positioning result information.

Optionally, the processor 1110 is configured to receive capability request information of the second communication device sent by a third communication device, and/or send the capability information of the second communication device to the third communication device.

The capability request information of the second communication device or the capability information of the second communication device includes at least one of the following:
supporting multi-panel transmit beam or not supporting multi-panel transmit beam;
supporting multi-panel transmit beam reporting or not supporting multi-panel transmit beam reporting;
supporting transmit beam identification information based on panel division or not supporting transmit beam identification information based on panel division;
supporting transmit beam identification information based on division of the second communication device or not supporting transmit beam identification information based on division of the second communication device;
supporting reporting of panel information or not supporting reporting of panel information;
supporting reporting of intra-panel antenna information or not supporting reporting of intra-panel antenna information;
supporting reporting of angle information of the second communication device or not supporting reporting of angle information of the second communication device;
supporting reporting of antenna virtualization information or not supporting reporting of antenna virtualization information;
supporting reporting of calibration information or not supporting reporting of calibration information;
supporting calibration of Rx-Tx timing error between panels or not supporting calibration of Rx-Tx timing error between panels;
supporting angle measurement for multi-TXRU or not supporting angle measurement for multi-TXRU;
supporting LOS/NLOS identification or not supporting LOS/NLOS identification;
supporting reporting of additional angle information or not supporting reporting of additional angle information; and
supporting reporting of angle information and corresponding time and/or capability information or not supporting reporting of angle information and corresponding time and/or capability information.

Optionally, the radio frequency unit 1101 is further configured to send an angular positioning measurement result.

The angular positioning measurement result includes at least one of the following: positioning reference signal identification information corresponding to angular positioning measurement; energy information; time measurement information; K-factor information; timestamp information; a sixth list, where the sixth list is a correspondence between energy information and transmit-receive beam pairs; and one or more pieces of additional angle measurement information.

The additional angle measurement information includes at least one of the following:
angle information corresponding to an additional path;
energy information corresponding to the additional path;
time measurement information corresponding to the additional path;
K-factor information corresponding to the additional path;
timestamp information corresponding to the additional path;
receive beam identification information corresponding to the additional path; and
receive antenna information corresponding to the additional path.

Optionally, the radio frequency unit 1101 is further configured to receive first target beam information and/or receive first beam information.

The first target beam information includes at least one of the following:
receive beam identification information corresponding to a beam for receiving the first positioning reference signal;
receive beam pattern information or response information corresponding to the beam for receiving the first positioning reference signal;
receive beam direction information corresponding to the beam for receiving the first positioning reference signal;
receive beam width information corresponding to the beam for receiving the first positioning reference signal; and
receive antenna information of the first communication device.

The first beam information includes at least one of the following:
receive beam identification information;
receive beam pattern information or response information;
receive beam direction information;
receive beam width information; and
receive antenna information of the first communication device.

Optionally, the processor 1110 is further configured to: based on the first target beam information and/or the first beam information, and the second target beam information and/or the second beam information, determine whether LOS/NLOS identification information is present in a beam measurement result.

Optionally, the radio frequency unit 1101 is further configured to: if the LOS/NLOS identification information is present in the beam measurement result, sending the LOS/NLOS identification information to the first communication device and/or a third communication device.

Optionally, the radio frequency unit 1101 is further configured to receive sixth information, where the sixth information is used to indicate transmit beam information of the second communication device.

The sixth information includes at least one of the following: positioning reference signal identification information; transmit beam identification information of the second communication device; transmit antenna information of the second communication device; panel or TXRU indication information; and an error calibration result between panels.

Optionally, the processor 1110 is further configured to: determine a transmit beam based on the sixth information, or determine a transmit beam for the second communication device itself.

The terminal embodiment in the embodiments of this application is a product embodiment corresponding to the foregoing method embodiment, and all the implementations in the foregoing method embodiment are applicable to this terminal embodiment, with the same or similar technical effects achieved. Therefore, details are not repeated herein.

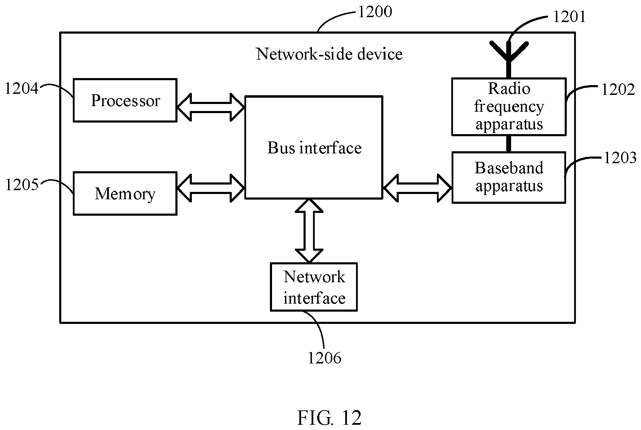

Specifically, an embodiment of this application further provides a network-side device. As shown in FIG. 12, the network-side device 1200 includes an antenna 1201, a radio frequency apparatus 1202, and a baseband apparatus 1203. The antenna 1201 is connected to the radio frequency apparatus 1202. In an uplink direction, the radio frequency apparatus 1202 receives information by using the antenna 1201, and sends the received information to the baseband apparatus 1203 for processing. In a downlink direction, the baseband apparatus 1203 processes to-be-sent information, and sends the information to the radio frequency apparatus 1202; and the radio frequency apparatus 1202 processes the received information and then sends the information out by using the antenna 1201.

The frequency band processing apparatus may be located in the baseband apparatus 1203. The method performed by the network-side device in the foregoing embodiments may be implemented in the baseband apparatus 1203, and the baseband apparatus 1203 includes a processor 1104 and a memory 1205.

The baseband apparatus 1203 may include, for example, at least one baseband board, where a plurality of chips are disposed on the baseband board. As shown in FIG. 12, one of the chips, for example, the processor 1204, is connected to the memory 1205, to invoke a program in the memory 1205 to perform the operation of the network device shown in the foregoing method embodiments.

The baseband apparatus 1203 may further include a network interface 1206, configured to exchange information with the radio frequency apparatus 1202, where the interface is, for example, a common public radio interface (common public radio interface, CPRI for short).

Specifically, the network-side device in this embodiment of the present invention further includes: instructions or a program stored in the memory 1205 and capable of running on the processor 1204. The processor 1204 invokes the instructions or program in the memory 1205 to execute the method executed by the modules shown in FIG. 7, FIG. 8, or FIG. 9, with the same technical effects achieved. To avoid repetition, details are not described herein again.

The network-side device embodiment in the embodiments of this application is a product embodiment corresponding to the foregoing method embodiment, and all the implementations in the foregoing method embodiment are applicable to the network-side device embodiment, with the same or similar technical effects achieved. Details are not repeated herein.

An embodiment of the present invention further provides a readable storage medium, where a program or an instruction is stored in the readable storage medium. When the program or instruction is executed by a processor, the processes of the foregoing positioning method embodiment can be implemented, with same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions to implement the foregoing positioning method embodiments, with the same technical effects achieved. To avoid repetition, details are not repeated herein.

It should be understood that the chip mentioned in the embodiments of this application may also be referred to as a system-level chip, a system chip, a chip system, a system-on-chip, or the like.

It should be noted that in this specification, the term "include", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that, in the scope of the method and apparatus in the embodiments of this application, execution of the functions are not limited to the order shown or described, and the functions may alternatively be executed in a substantially simultaneous manner or in a reverse order. For example, the described method may be performed in an order different from that described, and steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A positioning method, comprising:
receiving, by a first communication device, a first positioning reference signal and determining first target beam information;
and/or,
determining, by the first communication device, location information based on the first positioning reference signal and sending the location information and first beam information; wherein
the first target beam information is information about a beam receiving the first positioning reference signal, and the first target beam information comprises at least one of the following:
receive beam identification information corresponding to a beam for receiving the first positioning reference signal;
receive beam pattern information or response information corresponding to the beam for receiving the first positioning reference signal;
receive beam direction information corresponding to the beam for receiving the first positioning reference signal;
receive beam width information corresponding to the beam for receiving the first positioning reference signal; and
receive antenna information of the first communication device; wherein
the first beam information comprises at least one of the following:
receive beam identification information;
receive beam pattern information or response information;
receive beam direction information;
receive beam width information; and
receive antenna information of the first communication device.

2. The positioning method according to claim 1, further comprising:
sending the first target beam information for one or more times, wherein the first target beam information is used for determining location information of a terminal and/or line-of-sight LOS/non-line-of-sight NLOS identification information by a network-side device.

3. The positioning method according to claim 1, wherein the receive beam identification information comprises at least one of the following:
receive beam identification information based on panel division; and
receive beam identification information based on division of the first communication device.

4. The positioning method according to claim 1, wherein the receive beam pattern information or response information comprises:
energy response information of at least one receive beam corresponding to the receive beam identification information at various angles;
or,
energy response information of a receive beam corresponding to the receive beam identification information and one or more adj acent beams at various angles;
or,
energy response information of multiple or all receive beams at various angles; wherein
the energy response information of the beam at various angles is expressed in one of the following manners:
discrete Fourier transform DFT coefficient;
a first list, wherein the first list is a list of at least one angle and energy;
a first set, wherein the first set is a set of at least one angle and energy;
a second list, wherein the second list is an energy list obtained according to a preset rule and granularity; and
a second set, wherein the second set is an energy set obtained according to a preset rule and granularity.

5. The positioning method according to claim 1, wherein the receive beam direction information comprises at least one of the following:
azimuth information; and
vertical inclination information; wherein
the azimuth information is information about a comprised angle relative to a reference direction, and the reference direction is local direction information of the first communication device or a geographical north direction.

6. The positioning method according to claim 1, wherein the receive beam width information comprises at least one of the following:
angle width information of a receive beam corresponding to the receive beam identification information in a case that energy information of the receive beam is greater than a first threshold;
angle width information of the receive beam corresponding to the receive beam identification information in a case that the energy information of the receive beam is greater than a percent A of a maximum energy of the receive beam;
angle width information of the receive beam corresponding to the receive beam identification information in a case that the energy information of the receive beam is equal to energy information of an adjacent beam;
angle width information of the receive beam corresponding to the receive beam identification information in a case that main lobe energy information of the receive beam is greater than a second threshold;
angle width information of the receive beam corresponding to the receive beam identification information in a case that the main lobe energy information of the receive beam is greater than a percent B of a maximum main lobe energy of the receive beam; and
angle width information of the receive beam corresponding to the receive beam identification information in a case that the main lobe energy information of the receive beam is equal to main lobe energy information of the adjacent beam;
or,
the receive beam width information comprises at least one of the following:
angle width information of a receive beam corresponding to the receive beam identification information in a case that energy information of the receive beam is greater than a third threshold, and angle width information of an adjacent beam in a case that energy information of the adjacent beam is greater than a fourth threshold;
angle width information of the receive beam corresponding to the receive beam identification information in a case that the energy information of the receive beam is greater than a percent C of a maximum energy of the receive beam, and angle width information of the adjacent beam in a case that the energy information of the adjacent beam is greater than a percent D of a maximum energy of the adjacent beam;
angle width information of the receive beam corresponding to the receive beam identification information in a case that the energy information of the receive beam is equal to the energy information of the adjacent beam, and angle width information of the adjacent beam in a case that the energy information of the adjacent beam is equal to the energy information of the receive beam corresponding to the receive beam identification information;
angle width information of the receive beam corresponding to the receive beam identification information in a case that main lobe energy information of the receive beam is greater than a fifth threshold, and angle width information of the adjacent beam in a case that main lobe energy information of the adjacent beam is greater than a sixth threshold;
angle width information of the receive beam corresponding to the receive beam identification information in a case that the main lobe energy information of the receive beam is greater than a percent E of a maximum main lobe energy of the receive beam, and angle width information of the adjacent beam in a case that the main lobe energy information of the adjacent beam is greater than a percent F of a maximum main lobe energy of the adj acent beam; and
angle width information of the receive beam corresponding to the receive beam identification information in a case that the main lobe energy information of the receive beam is equal to the main lobe energy information of the adjacent beam, and angle width information of the adjacent beam in a case that the main lobe energy information of the adjacent beam is equal to the main lobe energy information of the receive beam corresponding to the receive beam identification information;
or,
the receive beam width information comprises at least one of the following:
angle width information of multiple or all receive beams in a case that energy information of the multiple or all receive beams is greater than a seventh threshold;
angle width information of the multiple or all receive beams in a case that the energy information of the multiple or all receive beams is greater than a percent G of maximum energies of the multiple or all receive beams;
angle width information of the multiple or all receive beams in a case that the energy information of the multiple or all receive beams is equal to energy information of an adjacent beam;
angle width information of the multiple or all receive beams in a case that main lobe energy information of the multiple or all receive beams is greater than an eighth threshold;
angle width information of the multiple or all receive beams in a case that the main lobe energy information of the multiple or all receive beams is greater than a percent H of maximum main lobe energies of the multiple or all receive beams; and
angle width information of the multiple or all receive beams in a case that the main lobe energy information of the multiple or all receive beams is equal to main lobe energy information of the adj acent beam; wherein
A, B, C, D, E, F, G, and H are all natural numbers greater than 0 and less than 100.

7. The positioning method according to claim 1, wherein the receive antenna information of the first communication device comprises at least one of the following:
panel information;
intra-panel antenna information;
angle information of the first communication device;
antenna virtualization information; and
calibration information.

8. The positioning method according to claim 7, wherein the panel information comprises at least one of the following:
panel identification information;
panel quantity information; and
panel location information; wherein
the panel location information comprises at least one of the following: arrangement information of a plurality of panels; panel spacing; and a position of a panel relative to a local coordinate system or a global coordinate system of the first communication device.

9. The positioning method according to claim 7, wherein the intra-panel antenna information comprises at least one of the following:
antenna identification information;
antenna quantity information;
antenna location information; and
antenna polarization information; wherein
the antenna location information comprises at least one of the following: arrangement information of a plurality of antennas, antenna spacing, antenna aperture, and antenna position within a panel.

10. The positioning method according to claim 7, wherein the angle information of the first communication device comprises at least one of the following:
angle information of a local coordinate system of the first communication device; and
a conversion parameter between the local coordinate system of the first communication device and a global coordinate system.

11. The positioning method according to claim 7, wherein the antenna virtualization information comprises at least one of the following:
transmit and receive unit TXRU virtualization assumption;
channel state information reference signal CSI-RS port mapping information;
sounding reference signal SRS port mapping information;
sounding reference signal for positioning SRS-pos port mapping information; and
positioning reference signal PRS port mapping information.

12. The positioning method according to claim 7, wherein the calibration information comprises at least one of the following:
whether a receive-transmit time error Rx-Tx timing error has been calibrated for multiple panels;
receive-transmit time error Rx-Tx timing error;
whether a beam angle deviation has been calibrated; and
beam angle deviation.

13. The positioning method according to claim 2, wherein the sending the first target beam information and/or the first beam information comprises:
sending first information, wherein the first information carries the first target beam information and/or first beam information; wherein
the first information is one of the following:
capability information of the first communication device;
positioning assistance information of the first communication device;
response information of the first communication device;
positioning information updating information of the first communication device;
location measurement information; and
positioning result information.

14. The positioning method according to claim 2, wherein the sending the first target beam information comprises:
sending second information, wherein the second information carries the first target beam information and/or an angular positioning measurement result; wherein
the angular positioning measurement result comprises at least one of the following:
positioning reference signal identification information corresponding to angular positioning measurement;
energy information;
time measurement information;
K-factor information;
timestamp information;
a fifth list, wherein the fifth list is a correspondence between energy information and transmit-receive beam pairs; and
one or more pieces of additional angle measurement information; wherein
the additional angle measurement information comprises at least one of the following:
angle information corresponding to an additional path;
energy information corresponding to the additional path;
time measurement information corresponding to the additional path;
K-factor information corresponding to the additional path;
timestamp information corresponding to the additional path;
receive beam identification information corresponding to the additional path; and
receive antenna information corresponding to the additional path; wherein
the first target beam information comprises at least one of the following:
receive beam identification information corresponding to the beam for receiving the first positioning reference signal; and
receive antenna information of the first communication device.

15. The positioning method according to claim 14, wherein the second information comprises at least one of the following:
second information of a second positioning reference signal, wherein one or more transmit beams adjacent to a third transmit beam are used to transmit the second positioning reference signal, and the third transmit beam is a transmit beam corresponding to a receive beam corresponding to the receive beam identification information; and
second information of a third positioning reference signal, wherein one or more transmit beams corresponding to a same receive beam are used to transmit the third positioning reference signal.

16. The positioning method according to claim 1 or 2, before the sending the first beam information and/or the first target beam information, further comprising:
receiving capability request information of the first communication device sent by a third communication device, and/or sending capability information of the first communication device to the third communication device; wherein
the capability request information of the first communication device or the capability information of the first communication device comprises at least one of the following:
supporting multi-panel receive beam or not supporting multi-panel receive beam;
supporting multi-panel receive beam reporting or not supporting multi-panel receive beam reporting;
supporting receive beam identification information based on panel division or not supporting receive beam identification information based on panel division;
supporting receive beam identification information based on division of the first communication device or not supporting receive beam identification information based on division of the first communication device;
supporting reporting of panel information or not supporting reporting of panel information;
supporting reporting of intra-panel antenna information or not supporting reporting of intra-panel antenna information;
supporting reporting of angle information of the first communication device or not supporting reporting of angle information of the first communication device;
supporting reporting of antenna virtualization information or not supporting reporting of antenna virtualization information;
supporting reporting of calibration information or not supporting reporting of calibration information;
supporting calibration of Rx-Tx timing error between panels or not supporting calibration of Rx-Tx timing error between panels;
supporting angle measurement for multi-TXRU or not supporting angle measurement for multi-TXRU;
supporting LOS/NLOS identification or not supporting LOS/NLOS identification;
supporting reporting of additional angle information or not supporting reporting of additional angle information; and
supporting reporting of angle information and corresponding time and/or capability information or not supporting reporting of angle information and corresponding time and/or capability information.

17. The positioning method according to claim 1, further comprising:
receiving third information; wherein
the third information comprises at least one of the following:
location information of the first communication device;
location information of the second communication device;
second target beam information; and
second beam information; wherein
the second target beam information comprises at least one of the following:
transmit beam identification information corresponding to a beam for sending the first positioning reference signal;
transmit beam pattern information or response information corresponding to the beam for sending the first positioning reference signal;
transmit beam direction information corresponding to the beam for sending the first positioning reference signal;
transmit beam width information corresponding to the beam for sending the first positioning reference signal; and
transmit antenna information of the second communication device; wherein
the second beam information comprises at least one of the following:
transmit beam identification information;
transmit beam pattern information or response information;
transmit beam direction information;
transmit beam width information; and
transmit antenna information of the second communication device.

18. The positioning method according to claim 17, further comprising:
based on at least one of the third information, the first beam information, and the first target beam information, determining whether LOS/NLOS identification information is present in a beam measurement result, and/or determining a precise location information of the terminal.

19. The positioning method according to claim 18, further comprising:
sending the LOS/NLOS identification information.

20. The positioning method according to claim 1, further comprising:
receiving fourth information, wherein the fourth information is used to indicate receive beam information of the first communication device; wherein
the fourth information comprises at least one of the following:
positioning reference signal identification information;
receive beam identification information of the first communication device;
receive antenna information of the first communication device;
panel or TXRU indication information; and
an error calibration result between panels.

21. The positioning method according to claim 20, further comprising:
determining a receive beam based on the fourth information, or determining a receive beam by the first communication device itself.

22. The positioning method according to claim 1, further comprising:
receiving fifth information, wherein the fifth information is direction information of the first communication device or direction information of a beam of the first communication device.

23. A positioning method, comprising:
sending, by a second communication device, a first positioning reference signal and/or second target beam information; wherein
the first positioning reference signal is used for determining location information and/or first target beam information by a first communication device; and
the second target beam information is information about a beam for sending the first positioning reference signal, and the second target beam information comprises at least one of the following:
transmit beam identification information corresponding to the beam for sending the first positioning reference signal;
transmit beam pattern information or response information corresponding to the beam for sending the first positioning reference signal;
transmit beam direction information corresponding to the beam for sending the first positioning reference signal;
transmit beam width information corresponding to the beam for sending the first positioning reference signal; and
transmit antenna information of the second communication device.

24. The positioning method according to claim 23, further comprising:
sending second beam information to the first communication device and/or a third communication device; wherein
the second beam information comprises at least one of the following:
transmit beam identification information;
transmit beam pattern information or response information;
transmit beam direction information;
transmit beam width information; and
transmit antenna information of the second communication device.

25. The positioning method according to claim 23 or 24, wherein the transmit beam identification information comprises at least one of the following:
transmit beam identification information based on panel division; and
transmit beam identification information based on division of the second communication device.

26. The positioning method according to claim 23 or 24, wherein the transmit beam pattern information or response information comprises:
energy response information of at least one transmit beam corresponding to the transmit beam identification information at various angles;
or,
energy response information of a transmit beam corresponding to the transmit beam identification information and one or more adj acent beams at various angles;
or,
energy response information of multiple or all transmit beams at various angles; wherein
the energy response information of the beam at various angles is expressed in one of the following manners:
discrete Fourier transform DFT coefficient;
a third list, wherein the third list is a list of at least one angle and energy;
a third set, wherein the third set is a set of at least one angle and energy;
a fourth list, wherein the fourth list is an energy list obtained according to a preset rule and granularity; and
a fourth set, wherein the fourth set is a energy set obtained according to a preset rule and granularity.

27. The positioning method according to claim 23 or 24, wherein the transmit beam direction information comprises at least one of the following:
azimuth information; and
vertical inclination information; wherein
the azimuth information is information about a comprised angle relative to a reference direction, and the reference direction is local direction information of the second communication device or a geographical north direction.

28. The positioning method according to claim 23 or 24, wherein the transmit beam width information comprises at least one of the following:
angle width information of a transmit beam corresponding to the transmit beam identification information in a case that energy information of the transmit beam is greater than a ninth threshold;
angle width information of the transmit beam corresponding to the transmit beam identification information in a case that the energy information of the transmit beam is greater than a percent I of a maximum energy of the transmit beam;
angle width information of the transmit beam corresponding to the transmit beam identification information in a case that the energy information of the transmit beam is equal to energy information of an adjacent beam;
angle width information of a transmit beam corresponding to the transmit beam identification information in a case that main lobe energy information of the transmit beam is greater than a tenth threshold;
angle width information of the transmit beam corresponding to the transmit beam identification information in a case that the main lobe energy information of the transmit beam is greater than a percent J of a maximum main lobe energy of the transmit beam; and
angle width information of the transmit beam corresponding to the transmit beam identification information in a case that the main lobe energy information of the transmit beam is equal to main lobe energy information of an adjacent beam;
or,
the transmit beam width information comprises at least one of the following:
angle width information of a transmit beam corresponding to the transmit beam identification information in a case that energy information of the transmit beam is greater than an eleventh threshold, and angle width information of an adjacent beam in a case that energy information of the adjacent beam is greater than a twelfth threshold;
angle width information of the transmit beam corresponding to the transmit beam identification information in a case that the energy information of the transmit beam is greater than a percent K of a maximum energy of the transmit beam, and angle width information of the adjacent beam in a case that the energy information of the adjacent beam is greater than a percent L of a maximum energy of the adj acent beam;
angle width information of the transmit beam corresponding to the transmit beam identification information in a case that the energy information of the transmit beam is equal to the energy information of the adjacent beam, and angle width information of the adjacent beam in a case that the energy information of the adjacent beam is equal to the energy information of the transmit beam corresponding to the transmit beam identification information;
angle width information of a transmit beam corresponding to the transmit beam identification information in a case that main lobe energy information of the transmit beam is greater than a thirteenth threshold, and angle width information of the adjacent beam in a case that main lobe energy information of the adjacent beam is greater than a fourteenth threshold;
angle width information of the transmit beam corresponding to the transmit beam identification information in a case that the main lobe energy information of the transmit beam is greater than a percent M of a maximum main lobe energy of the transmit beam corresponding to the transmit beam identification information, and angle width information of the adjacent beam in a case that the main lobe energy information of the adjacent beam is greater than a percent N of a maximum main lobe energy of the adjacent beam; and
angle width information of the transmit beam corresponding to the transmit beam identification information in a case that the main lobe energy information of the transmit beam is equal to the main lobe energy information of the adjacent beam, and angle width information of the adjacent beam in a case that the main lobe energy information of the adjacent beam is equal to the main lobe energy information of the transmit beam corresponding to the transmit beam identification information;
or,
the transmit beam width information comprises at least one of the following:
angle width information of multiple or all transmit beams in a case that energy information of the multiple or all transmit beams is greater than a fifteenth threshold;
angle width information of the multiple or all transmit beams in a case that the energy information of the multiple or all transmit beams is greater than a percent O of maximum energies of the multiple or all transmit beams;
angle width information of the multiple or all transmit beams in a case that the energy information of the multiple or all transmit beams is equal to energy information of an adjacent beam;
angle width information of the multiple or all transmit beams in a case that main lobe energy information of the multiple or all transmit beams is greater than a sixteenth threshold;
angle width information of the multiple or all transmit beams in a case that the main lobe energy information of the multiple or all transmit beams is greater than a percent P of maximum main lobe energies of the multiple or all transmit beams; and
angle width information of the multiple or all transmit beams in a case that the main lobe energy information of the multiple or all transmit beams is equal to main lobe energy information of the adj acent beam; wherein
I, J, K, L, M, N, O, and P are all natural numbers greater than 0 and less than 100.

29. The positioning method according to claim 23 or 24, wherein the transmit antenna information of the second communication device comprises at least one of the following:
panel information;
intra-panel antenna information;
angle information of the second communication device;
antenna virtualization information; and
calibration information.

30. The positioning method according to claim 29, wherein the panel information comprises at least one of the following:
panel identification information;
panel quantity information; and
panel location information; wherein
the panel location information comprises at least one of the following: arrangement information of a plurality of panels; panel spacing; and a position of a panel relative to a local coordinate system of the second communication device or a global coordinate system.

31. The positioning method according to claim 29, wherein the intra-panel antenna information comprises at least one of the following:
antenna identification information;
antenna quantity information;
antenna location information; and
antenna polarization information; wherein
the antenna location information comprises at least one of the following: arrangement information of a plurality of antennas, antenna spacing, antenna aperture, and antenna position within a panel.

32. The positioning method according to claim 29, wherein the angle information of the second communication device comprises at least one of the following:
angle information of a local coordinate system of the second communication device; and
a conversion parameter between the local coordinate system of the second communication device and a global coordinate system.

33. The positioning method according to claim 29, wherein the antenna virtualization information comprises at least one of the following:
transmit and receive unit TXRU virtualization assumption;
channel state information reference signal CSI-RS port mapping information;
sounding reference signal SRS port mapping information;
sounding reference signal for positioning SRS-pos port mapping information; and
positioning reference signal PRS port mapping information.

34. The positioning method according to claim 29, wherein the calibration information comprises at least one of the following:
whether a receive-transmit time error Rx-Tx timing error has been calibrated for multiple panels;
receive-transmit time error Rx-Tx timing error;
whether a beam angle deviation has been calibrated; and
beam angle deviation.

35. The positioning method according to claim 23 or 24, wherein the sending the second target beam information and/or the second beam information comprises:
sending seventh information, wherein the seventh information carries the second target beam information and/or second beam information; wherein
the seventh information is one of the following:
capability information of the second communication device;
positioning assistance information of the second communication device;
response information of the second communication device;
positioning information updating information of the second communication device;
location measurement information; and
positioning result information.

36. The positioning method according to claim 23 or 24, before the sending the second target beam information or the second beam information, further comprising:
receiving capability request information of the second communication device sent by a third communication device, and/or sending the capability information of the second communication device to the third communication device; wherein
the capability request information of the second communication device or the capability information of the second communication device comprises at least one of the following:
supporting multi-panel transmit beam or not supporting multi-panel transmit beam;
supporting multi-panel transmit beam reporting or not supporting multi-panel transmit beam reporting;
supporting transmit beam identification information based on panel division or not supporting transmit beam identification information based on panel division;
supporting transmit beam identification information based on division of the second communication device or not supporting transmit beam identification information based on division of the second communication device;
supporting reporting of panel information or not supporting reporting of panel information;
supporting reporting of intra-panel antenna information or not supporting reporting of intra-panel antenna information;
supporting reporting of angle information of the second communication device or not supporting reporting of angle information of the second communication device;
supporting reporting of antenna virtualization information or not supporting reporting of antenna virtualization information;
supporting reporting of calibration information or not supporting reporting of calibration information;
supporting calibration of Rx-Tx timing error between panels or not supporting calibration of Rx-Tx timing error between panels;
supporting angle measurement for multi-TXRU or not supporting angle measurement for multi-TXRU;
supporting LOS/NLOS identification or not supporting LOS/NLOS identification;
supporting reporting of additional angle information or not supporting reporting of additional angle information; and
supporting reporting of angle information and corresponding time and/or capability information or not supporting reporting of angle information and corresponding time and/or capability information.

37. The positioning method according to claim 23, further comprising:
sending an angular positioning measurement result; wherein
the angular positioning measurement result comprises at least one of the following:
positioning reference signal identification information corresponding to angular positioning measurement;
energy information;
time measurement information;
K-factor information;
timestamp information;
a sixth list, wherein the sixth list is a correspondence between energy information and transmit-receive beam pairs; and
one or more pieces of additional angle measurement information; wherein
the additional angle measurement information comprises at least one of the following:
angle information corresponding to an additional path;
energy information corresponding to the additional path;
time measurement information corresponding to the additional path;
K-factor information corresponding to the additional path;
timestamp information corresponding to the additional path;
receive beam identification information corresponding to the additional path; and
receive antenna information corresponding to the additional path; wherein

38. The positioning method according to claim 23, further comprising:
receiving first target beam information and/or receiving first beam information;
the first target beam information comprises at least one of the following:
receive beam identification information corresponding to a beam for receiving the first positioning reference signal;
receive beam pattern information or response information corresponding to the beam for receiving the first positioning reference signal;
receive beam direction information corresponding to the beam for receiving the first positioning reference signal;
receive beam width information corresponding to the beam for receiving the first positioning reference signal; and
receive antenna information of the first communication device;
the first beam information comprises at least one of the following:
receive beam identification information;
receive beam pattern information or response information;
receive beam direction information;
receive beam width information; and
receive antenna information of the first communication device.

39. The positioning method according to claim 38, further comprising:
based on the first target beam information and/or the first beam information, and the second target beam information and/or the second beam information, determining whether LOS/NLOS identification information is present in a beam measurement result.

40. The positioning method according to claim 39, further comprising:
if the LOS/NLOS identification information is present in the beam measurement result, sending the LOS/NLOS identification information to the first communication device and/or a third communication device.

41. The positioning method according to claim 23, further comprising:
receiving sixth information, wherein the sixth information is used to indicate transmit beam information of the second communication device; wherein
the sixth information comprises at least one of the following:
positioning reference signal identification information;
transmit beam identification information of the second communication device;
transmit antenna information of the second communication device;
panel or TXRU indication information; and
an error calibration result between panels.

42. The positioning method according to claim 41, further comprising:
determining a transmit beam based on the sixth information, or determining a transmit beam by the second communication device itself.

43. A positioning method, comprising:
receiving, by a third communication device, at least one of the following:
first target beam information of a first communication device;
second target beam information of a second communication device; and
location information and first beam information of the first communication device; wherein
the first target beam information comprises at least one of the following:
receive beam identification information corresponding to a beam for receiving the first positioning reference signal;
receive beam pattern information or response information corresponding to the beam for receiving the first positioning reference signal;
receive beam direction information corresponding to the beam for receiving the first positioning reference signal;
receive beam width information corresponding to the beam for receiving the first positioning reference signal; and
receive antenna information of the first communication device; wherein
the first beam information comprises at least one of the following:
receive beam identification information;
receive beam pattern information or response information;
receive beam direction information;
receive beam width information; and
receive antenna information of the first communication device; wherein
the second target beam information comprises at least one of the following:
transmit beam identification information corresponding to a beam for sending the first positioning reference signal;
transmit beam pattern information or response information corresponding to the beam for sending the first positioning reference signal;
transmit beam direction information corresponding to the beam for sending the first positioning reference signal;
transmit beam width information corresponding to the beam for sending the first positioning reference signal; and
transmit antenna information of the second communication device.

44. The positioning method according to claim 43, further comprising:
receiving second beam information of the second communication device; wherein
the second beam information comprises:
transmit beam identification information;
transmit beam pattern information or response information;
transmit beam direction information;
transmit beam width information; and
transmit antenna information of the second communication device.

45. The positioning method according to claim 43, further comprising:
based on the first beam information and/or the first target beam information, and the second beam information and/or the second target beam information, determining whether LOS/NLOS identification information is present in a beam measurement result.

46. The positioning method according to claim 45, further comprising:
if the LOS/NLOS identification information is present, sending the LOS/NLOS identification information to the first communication device and/or the second communication device.

47. The positioning method according to claim 43, further comprising:
sending third information to the first communication device; wherein
the third information comprises at least one of the following:
location information of the first communication device;
location information of the second communication device;
second target beam information; and
second beam information.

48. The positioning method according to claim 43, further comprising:
sending fourth information to the first communication device, wherein the fourth information is used to indicate receive beam information of the first communication device; wherein
the fourth information comprises at least one of the following:
positioning reference signal identification information;
receive beam identification information of the first communication device;
receive antenna information of the first communication device; wherein
panel or transmit and receive unit TXRU indication information; and
an error calibration result between panels.

49. The positioning method according to claim 43, further comprising:
sending fifth information to the first communication device, wherein the fifth information is direction information of the first communication device or direction information of a beam of the first communication device.

50. The positioning method according to claim 43, further comprising:
sending sixth information to the second communication device, wherein the sixth information is used to indicate transmit beam information of the second communication device; wherein
the sixth information comprises at least one of the following:
positioning reference signal identification information;
transmit beam identification information of the second communication device;
transmit antenna information of the second communication device;
panel or TXRU indication information; and
an error calibration result between panels.

51. A positioning apparatus, comprising:
a first processing unit, configured to receive a first positioning reference signal and determine first target beam information;
and/or,
determine location information based on the first positioning reference signal and send the location information and first beam information; wherein
the first target beam information is information about a beam receiving the first positioning reference signal, and the first target beam information comprises at least one of the following:
receive beam identification information corresponding to a beam for receiving the first positioning reference signal;
receive beam pattern information or response information corresponding to the beam for receiving the first positioning reference signal;
receive beam direction information corresponding to the beam for receiving the first positioning reference signal;
receive beam width information corresponding to the beam for receiving the first positioning reference signal; and
receive antenna information of the first communication device; wherein
the first beam information comprises at least one of the following:
receive beam identification information;
receive beam pattern information or response information;
receive beam direction information;
receive beam width information; and
receive antenna information of the first communication device.

52. A positioning apparatus, comprising:
a third sending unit, configured to send a first positioning reference signal and/or second target beam information; wherein
the first positioning reference signal is used for determining location information and/or first target beam information by a first communication device; and
the second target beam information is information about a beam for sending the first positioning reference signal, and the second target beam information comprises at least one of the following:
transmit beam identification information corresponding to the beam for sending the first positioning reference signal;
transmit beam pattern information or response information corresponding to the beam for sending the first positioning reference signal;
transmit beam direction information corresponding to the beam for sending the first positioning reference signal;
transmit beam width information corresponding to the beam for sending the first positioning reference signal; and
transmit antenna information of the second communication device.

53. A positioning apparatus, comprising:
a sixth receiving unit, configured to receive at least one of the following:
first target beam information of a first communication device;
second target beam information of a second communication device; and
location information and first beam information of the first communication device; wherein
the first target beam information comprises at least one of the following:
receive beam identification information corresponding to a beam for receiving the first positioning reference signal;
receive beam pattern information or response information corresponding to the beam for receiving the first positioning reference signal;
receive beam direction information corresponding to the beam for receiving the first positioning reference signal;
receive beam width information corresponding to the beam for receiving the first positioning reference signal; and
receive antenna information of the first communication device; wherein
the first beam information comprises at least one of the following:
receive beam identification information;
receive beam pattern information or response information;
receive beam direction information;
receive beam width information; and
receive antenna information of the first communication device; wherein
the second target beam information comprises at least one of the following:
transmit beam identification information corresponding to a beam for sending the first positioning reference signal;
transmit beam pattern information or response information corresponding to the beam for sending the first positioning reference signal;
transmit beam direction information corresponding to the beam for sending the first positioning reference signal;
transmit beam width information corresponding to the beam for sending the first positioning reference signal; and
transmit antenna information of the second communication device.

54. A terminal, comprising a processor, a memory, and a program or instructions stored in the memory and capable of running on the processor, wherein when the program or the instructions are executed by the processor, the steps of the positioning method according to any one of claims 1 to 22 are implemented, or the steps of the positioning method according to any one of claims 23 to 42 are implemented.

55. A network-side device, comprising a processor, a memory, and a program or instructions stored in the memory and capable of running on the processor, wherein when the program or instructions are executed by the processor, the steps of the positioning method according to any one of claims 1 to 22 are implemented, or the steps of the positioning method according to any one of claims 24 to 42 are implemented, or the steps of the positioning method according to any one of claims 43 to 50 are implemented.

56. A readable storage medium, wherein the readable storage medium stores a program or instructions, and when the program or instructions are executed by a processor, the steps of the positioning method according to any one of claims 1 to 22 are implemented, or the steps of the positioning method according to any one of claims 23 to 42 are implemented, or the steps of the positioning method according to any one of claims 43 to 50 are implemented.

57. A computer software product, wherein when the computer software product is executed by at least one processor, the steps of the positioning method according to any one of claims 1 to 22 are implemented, or the steps of the positioning method according to any one of claims 23 to 42 are implemented, or the steps of the positioning method according to any one of claims 43 to 50 are implemented.

58. A terminal, wherein the device is configured to execute the positioning method according to any one of claims 1 to 22 or the positioning method according to any one of claims 23 to 42.

59. A network-side device, wherein the network-side device is configured to execute the positioning method according to any one of claims 1 to 22, or the positioning method according to any one of claims 24 to 42, or the positioning method according to any one of claims 43 to 50.

60. A chip, wherein the chip comprises a processor and a communication interface, the communication interface is coupled to the processor, and the processor is used to run a program or instructions to implement the positioning method according to any one of claims 1 to 22, or the positioning method according to any one of claims 23 to 42, or the positioning method according to any one of claims 43 to 50.
